# EUROPEAN PATENT APPLICATION

(11) **EP 4 697 395 A1**
(43) Date of publication of application: **18.02.2026**
(21) Application number: 24895685.6
(22) Date of filing: 25.07.2024
(51) Int. Cl.: H01M 4/13, H01M 4/139, H01M 10/00

(54) **SECONDARY BATTERY, MANUFACTURING METHOD AND ELECTRICAL APPARATUS**

(30) Priority: 30.11.2023 CN 202311641487
(71) Applicant: Contemporary Amperex Technology Co., Limited, Ningde, Fujian 352100 (CN)
(72) Inventor: WU, Kai, Ningde, Fujian 352100 (CN); CHAI, Zhisheng, Ningde, Fujian 352100 (CN); JIN, Haizu, Ningde, Fujian 352100 (CN); FU, Yonghao, Ningde, Fujian 352100 (CN)
(74) Representative: Ziebig Hengelhaupt Intellectual Property Attorneys Patentanwaltskanzlei PartGmbB
(86) International application number: PCT/CN2024/107548
(87) International publication number: WO 2025/112582

(57) **Abstract**

The present disclosure relates to the technical field of lithium batteries, and specifically to a secondary battery, a preparation method therefor, and an electrical device. The secondary battery includes a negative electrode. A current collector includes a first region and a second region. The second region is close to a tab. A first active material layer is located in the first region. A second active material layer is located in the second region. The percentage by weight of the silicon-based material in the second active material layer is greater than the percentage by weight of the silicon-based material in the first active material layer. The percentage by weight of the first carbon material in the second active material layer is greater than the percentage by weight of the first carbon material in the first active material layer. Therefore, the capacity of the second region can be increased, the charging speed of the second region can be increased, and the precipitation of lithium dendrites in the second region can be alleviated.

## Description

### CROSS-REFERENCE TO RELATED APPLICATIONS

The present disclosure claims priority to Chinese Patent Application No. 202311641487.7, filed on November 30, 2023 and entitled "SECONDARY BATTERY, PREPARATION METHOD THEREFOR, AND ELECTRICAL DEVICE," the entire content of which is incorporated herein by reference.

### TECHNICAL FIELD

The present disclosure relates to the technical field of lithium-ion batteries, and specifically to a secondary battery, a preparation method therefor, and an electrical device.

### BACKGROUND

In recent years, lithium-ion batteries have made great progress. Lithium-ion batteries can be widely used in energy storage power systems such as hydraulic, thermal, wind, and solar power stations, as well as in various fields such as electric vehicles, power tools, military equipment, aerospace, etc. When lithium-ion batteries are used in electric vehicle fields such as electric bicycles, electric motorcycles, and electric automobiles, as the market has higher requirements on the mileage range of electric vehicles, the demand for cycle performance and fast charging capabilities of lithium-ion batteries continues to increase.

### SUMMARY

In view of this, a main technical problem to be solved by the present disclosure is to improve the cycle performance and the fast charging capability of a lithium-ion battery, and provide a secondary battery, a preparation method therefor, and an electric device. As such, the cycle performance and the fast charging capability of a secondary battery can be improved.

A first aspect of the present disclosure provides a secondary battery, including a negative electrode, where the negative electrode includes a current collector and an active material layer arranged on a surface of the current collector, the active material layer includes a silicon-based material and a carbon-containing material, and the carbon-containing material includes a first carbon material; the current collector includes a main body portion and a tab located on one side of the main body portion, the main body portion includes a first region and a second region, and the second region is located between the first region and the tab; the active material layer includes a first active material layer and a second active material layer, the first active material layer is located in the first region, and the second active material layer is located in the second region; the percentage by weight of the silicon-based material in the second active material layer is greater than the percentage by weight of the silicon-based material in the first active material layer; and the percentage by weight of the first carbon material in the second active material layer is greater than the percentage by weight of the first carbon material in the first active material layer.

In embodiments of the present disclosure, the active material layer of the negative electrode includes a silicon-based material and a carbon-containing material, and the capacity of the negative electrode can be increased by adding a high-capacity silicon-based material to the carbon-containing material. In embodiments of the present disclosure, first, by setting the percentage by weight of the silicon-based material in the second active material layer to be greater than the percentage by weight of the silicon-based material in the first active layer, the capacity per unit volume of the active material layer in the region of the negative electrode close to the tab (i.e., the second region) is higher than that in the main body region (i.e., the first region), the capacity of the second region can be improved, and the occurrence of a decrease in the capacity of the negative electrode caused by thinning of the second region relative to the first region due to the impact of the preparation process of the negative electrode can be significantly alleviated. Secondly, the expansion coefficient of the silicon-based material is greater than that of the carbon-containing material, and by setting the percentage by weight of the silicon-based material in the second region to be higher than the percentage by weight in the first region, the expansion degree of the second active material layer in the second region is greater than the expansion degree of the first active material layer in the first region during charging and discharging, so that the porosity and the specific surface area of the second active material layer in the second region are increased more significantly, and the contact area between the second active material layer and the electrolyte solution is increased. This can improve the transport capacity of lithium ions, reduce the occurrence of lithium ion precipitation in the second region, and alleviate the occurrence of lithium plating in the second region of the negative electrode. Thirdly, due to the high lithium intercalation potential of the silicon-based material, the potential of the electrode is higher during charging, which significantly improves the fast charging capability of the negative electrode. In embodiments of the present disclosure, the carbon-containing material includes a first carbon material, which is a fast-charging high-dynamic carbon material, so that the fast-charging capability of the second region can be improved. In embodiments of the present disclosure, by controlling the percentage by weight of the silicon-based material in the second active material layer to be greater than the percentage by weight of the silicon-based material in the first active material layer and controlling the percentage by weight of the first carbon material in the second active material layer to be greater than the percentage by weight of the first carbon material in the first active material, the capacity of the second region and the charging speed of the second region can be improved to alleviate the problem caused by the thinning of the second active material layer in the second region of the negative electrode during battery preparation. As such, the overall fast charging capability and cycle stability of the secondary battery can be improved.

In an embodiment, a ratio of the percentage by weight of the silicon-based material in the second active material layer to the percentage by weight of the silicon-based material in the first active material layer is greater than 1:1 and less than or equal to 80:1. In embodiments of the present disclosure, by controlling the ratio of the percentage by weight of the silicon-based material in the second active material layer to the percentage by weight of the silicon-based material in the first active material layer to be within the above range, the problem caused by the thinning of the second active material layer in the second region due to process reasons can be alleviated, and the difference in capacity per unit area between the second active material layer and the first active material layer can be reduced, thereby alleviating the precipitation of lithium dendrites in the second active material layer and improving the fast charging capability of the second active material layer.

In embodiments of the present disclosure, the capacity per unit area refers to the capacity of the active material layer per unit area defined in parallel to the plane where the current collector lies.

In an embodiment, a ratio of the percentage by weight of the silicon-based material in the second active material layer to the percentage by weight of the silicon-based material in the first active material layer is greater than or equal to 1.3 and less than or equal to 30:1. In embodiments of the present disclosure, by controlling the ratio of the percentage by weight of the silicon-based material in the second active material layer to the percentage by weight of the silicon-based material in the first active material layer to be within the above range, the problem caused by the thinning of the second active material layer in the second region due to process reasons can be well alleviated, so that the difference in capacity per unit area between the second active material layer and the first active material layer is reduced, thereby alleviating the local precipitation of lithium dendrites in the negative electrode. As such, the difference in fast charging capability between the second active material layer and the first active material layer is small, and large capacity and high stability of the second active material layer are achieved.

In an embodiment, the percentage by weight of the silicon-based material in the first active material layer ranges from 0.5% to 30%, optionally from 1% to 20%. In embodiments of the present disclosure, by controlling the percentage by weight of the silicon-based material in the first active material layer to be within the above range, a satisfactory reversible gram capacity of the first active material layer of the negative electrode is achieved, thereby enabling the secondary battery to have a high energy density, and high stability of the first active material layer is achieved, thereby enabling the secondary battery to have good cycle performance.

In an embodiment, the percentage by weight of the silicon-based material in the second active material layer ranges from 1% to 40%, optionally from 1.5% to 30%. In embodiments of the present disclosure, by controlling the percentage by weight of the silicon-based material in the second active material layer so that the percentage by weight of the silicon-based material in the second active material layer is greater than the percentage by weight of the silicon-based material in the first active material layer, a satisfactory reversible gram capacity and high stability of the second active material layer are achieved. As such, the capacity per unit volume of the second active material layer in the second region is greater than the capacity per unit volume of the first active material layer in the first region, thereby reducing the occurrence of lithium plating in the second region of the secondary battery.

In an embodiment, in the second region, the percentage by weight of the first carbon material in the carbon-containing material ranges from 40% to 100%, optionally from 50% to 90%. In embodiments of the present disclosure, by controlling the percentage by weight of the first carbon material in the carbon-containing material in the second region, the content of the first carbon material in the second region is satisfactory, so that the second active material layer in the second region has high stability and good fast charging performance.

In an embodiment, in the first region, the percentage by weight of the first carbon material in the carbon-containing material ranges from 20% to 99%, optionally from 35% to 89%. In embodiments of the present disclosure, by controlling the percentage by weight of the first carbon material in the carbon-containing material in the first region, the content of the first carbon material in the first region is satisfactory, so that the difference in fast charging performance of the active material per unit area between the first region and the second region is small, thereby improving the fast charging ability and stability of the negative electrode.

In an embodiment, the percentage by weight of the first carbon material in the second active material layer 1422 in the second region 1413 ranges from 24% to 96%, optionally from 35% to 89%. In embodiments of the present disclosure, by controlling the percentage by weight of the first carbon material in the second active material layer 1422 in the second region 1413 to be within the above range, the content of the first carbon material in the second active material layer 1422 in the second region 1413 is satisfactory, so that the second active material layer 1422 in the second region 1413 has high stability and good fast charging performance.

In an embodiment, in the first region 1412, the percentage by weight of the first carbon material in the first active material layer 1421 ranges from 14% to 79%, optionally from 24% to 69%. By controlling the percentage by weight of the first carbon material in the first active material layer 1421 in the first region 1412 to be within the above range, the content of the first carbon material in the first active material layer 1421 in the first region 1412 is satisfactory, so that the second active material layer 1422 in the first region 1412 has high stability and good fast charging performance.

In an embodiment, the carbon-containing material further includes a second carbon material, and a reversible gram capacity of the first carbon material is less than a reversible gram capacity of the second carbon material. In embodiments of the present disclosure, the second carbon material is a high-capacity carbon material, the first carbon material is a fast-charging carbon material, and by controlling the contents of the first carbon material and the second carbon material, the capacity and fast-charging performance of the secondary battery can be controlled to a certain extent.

In an embodiment, a volume mean particle size Dv50 of the first carbon material is smaller than a volume mean particle size Dv50 of the second carbon material. In embodiments of the present disclosure, the volume mean particle size Dv50 of the first carbon material is smaller than the volume mean particle size Dv50 of the second carbon material, the specific surface area of the first carbon material is larger, and lithium ions can migrate through more channels and shorter paths during charging and discharging, so the fast charging capability of the first carbon material is greater than the fast charging capability of the second carbon material. The volume mean particle size Dv50 of the second carbon material is larger, and the second carbon material has a smaller specific surface area, higher compaction density, and larger capacity, so the reversible gram capacity of the second carbon material is greater than the reversible gram capacity of the first carbon material.

In an embodiment, the volume mean particle size DV50 of the first carbon material is greater than or equal to 1 µm and less than or equal to 15 µm. In embodiments of the present disclosure, by controlling the volume mean particle size DV50 of the first carbon material to be within the above range, the fast charging performance of the first carbon material is satisfactory.

In an embodiment, the volume mean particle size DV50 of the second carbon material is greater than or equal to 7 µm and less than or equal to 22 µm. In embodiments of the present disclosure, by controlling the volume mean particle size DV50 of the first carbon material to be within the above range, the reversible gram capacity performance of the second carbon material is satisfactory.

In an embodiment, the reversible gram capacity of the first carbon material ranges from 330 mAh/g to 360 mAh/g, optionally from 330 mAh/g to 360 mAh/g. In embodiments of the present disclosure, when the reversible gram capacity of the first carbon material is within the above range, the formed negative electrode has a large reversible gram capacity and high stability.

In an embodiment, the reversible gram capacity of the second carbon material ranges from 350 mAh/g to 380 mAh/g, optionally from 350 mAh/g to 380 mAh/g. In embodiments of the present disclosure, because the reversible gram capacity of the second carbon material is within the above range, the formed negative electrode has a satisfactory reversible gram capacity and high stability.

In an embodiment, a ratio of an area of the second region to an area of the first region is (3-20):100. The ratio of the area of the second region to the area of the first region is optionally (5-15):100. In embodiments of the present disclosure, by controlling the ratio of the area of the second region to the area of the first region to be within the above range so that the contents of the silicon-based material and the first carbon material in the first region and the second region of the negative electrode are appropriate, lithium plating in the second region of the negative electrode can be well alleviated, and the negative electrode has a high reversible gram capacity and higher stability.

In any embodiment, a width of the second region in a direction from the first region to the tab is greater than zero and less than or equal to 20 mm. Optionally, the width of the second region is greater than zero and less than or equal to 10 mm. In embodiments of the present disclosure, when the width of the second region in the direction from the first region to the tab is within the above range, the width of the second region is small, and the impact of the second active material layer in the second region on the entire negative electrode is small.

In an embodiment, the secondary battery further includes a positive electrode, a CB value of the second active material layer is greater than or equal to a CB value of the first active material layer, and the CB value is a ratio of a lithium intercalation capacity of the negative electrode per unit area to a release capacity of the positive electrode per unit area. In embodiments of the present disclosure, by controlling the CB value of the second active material layer to be greater than or equal to the CB value of the first active material layer, the lithium intercalation capacity per unit area in the second active material layer is large, and the occurrence of lithium plating in the second region during charging and discharging of the secondary battery is reduced.

In an embodiment, the first active material layer includes a first surface and a second surface, the first surface is close to the negative electrode current collector, the second surface is away from the negative electrode current collector, a thickness of the first active material layer is defined as H, and the first active material layer satisfies: a region formed from the first surface to 0.1H is a first sub-region, a region formed from the second surface to 0.1H is a second sub-region, and the percentage by weight of the silicon-based material in the second sub-region is greater than the percentage by weight of the silicon-based material in the first sub-region. In embodiments of the present disclosure, by controlling the percentage by weight of the silicon-based material in the second sub-region to be greater than the percentage by weight of the silicon-based material in the first sub-region, i.e., controlling the silicon content in the upper surface layer (close to the second surface) to be greater than the lower surface layer (close to the first surface), the silicon content is larger, and the silicon-based material expands during charging and discharging, so that the specific surface area of the active material layer in the first sub-region of the upper surface is larger, which is conducive to increasing the contact area with the electrolyte solution, thereby increasing the capacity of the negative electrode and improving the charging effect of the negative electrode.

In an embodiment, the percentage by weight of the silicon-based material in the first sub-region is greater than or equal to 0 and less than or equal to 25% based on the total weight of the silicon-based material and the carbon-containing material in the first sub-region. In embodiments of the present disclosure, by controlling the percentage by weight of the silicon-based material in the first sub-region to be within the above range, the negative electrode has high capacity and high stability.

In an embodiment, the percentage by weight of the silicon-based material in the second sub-region is greater than or equal to 1% and less than or equal to 35% based on the total weight of the silicon-based material and the carbon-containing material in the second sub-region. In embodiments of the present disclosure, by controlling the percentage by weight of the silicon-based material in the second sub-region to be within the above range, the negative electrode has high capacity and high stability.

In an embodiment, the percentage by weight of the first carbon material in the carbon-containing material per unit area in the second sub-region is greater than the percentage by weight of the first carbon material in the carbon-containing material per unit area in the first sub-region. By controlling the percentage by weight of the first carbon material in the carbon-containing material in the second sub-region to be greater than the percentage by weight of the first carbon material in the carbon-containing material in the first sub-region, the fast charging performance of the negative electrode can be improved.

In an embodiment, the percentage by weight of the first carbon material in the carbon-containing material per unit area in the second sub-region ranges from 20% to 85%, preferably from 30% to 75%. In embodiments of the present disclosure, by controlling the percentage by weight of the first carbon material in the carbon-containing material in the second sub-region to be within the above range, the second sub-region has satisfactory fast charging performance and high stability in embodiments of the present disclosure, so that the fast charging performance of the negative electrode is improved, and the occurrence of lithium plating of the negative electrode is reduced.

In an embodiment, the percentage by weight of the first carbon material in the carbon-containing material per unit area in the first sub-region ranges from 0 to 75%, preferably from 20% to 65%. In embodiments of the present disclosure, by controlling the percentage by weight of the first carbon material in the carbon-containing material in the first sub-region, the first sub-region has high capacity and high stability, thereby improving the stability of the negative electrode.

In an embodiment, the active material layer includes a base layer and a supplementary layer, where the base layer is located in the first region and the second region; and the supplementary layer is arranged on a side of the base layer of the second region facing away from the current collector, the percentage by weight of the silicon-based material in the supplementary layer is greater than the percentage by weight of the silicon-based material of the base layer, and the percentage by weight of the first carbon material in the supplementary layer is greater than the percentage by weight of the first carbon material of the base layer. In embodiments of the present disclosure, by providing the supplementary layer, the contents of the silicon-based material and the first carbon material in the second region can be increased, to alleviate the problem caused by the thinning of the second active material layer in the second region of the negative electrode during battery preparation. As such, the overall fast charging capability and cycle stability of the secondary battery can be improved.

In an embodiment, the active material layer includes a base layer and an additional layer, where the additional layer integrally extends to cover a side of the base layer facing away from the current collector and a side of the base layer close to the tab, and a portion of the additional layer covering the side of the base layer close to the tab is located in the second region. In embodiments of the present disclosure, the active material layer includes two or more layers so that the additional layer covers an end portion of the base layer close to the tab, and by controlling the percentage by weight of the silicon-based material in the additional layer to be greater than the percentage by weight of the silicon-based material in the base layer and the percentage by weight of the first carbon material in the additional layer to be greater than the percentage by weight of the first carbon material in the additional layer, the percentage by weight of the silicon-based material in the second region can be controlled to be greater than the percentage by weight of the silicon-based material in the first region, and the percentage by weight of the first carbon material in the second region can be controlled to be greater than the percentage by weight of the first carbon material in the first region. In embodiments of the present disclosure, the configuration of the active material layer as a two-layer structure facilitates the preparation of the active material layer, and improves the capacity per unit area and the fast charging capacity of the second region and reduces the occurrence of lithium plating in the second region.

In an embodiment, the silicon-based material includes any one or more of silicon, a silicon-carbon composite material, silicon oxide, and a silicon oxide-carbon composite material.

In an embodiment, the carbon-containing material includes graphite. The first carbon material includes hard carbon. The hard carbon refers to a carbon material that is difficult to graphitize at a high temperature of 2500°C or above. The hard carbon includes resin carbon, organic polymer pyrolytic carbon, carbon black, biomass carbon, and the like. The interlayer spacing of the hard carbon is greater than the thickness of a single layer of graphite, and the large interlayer spacing is conducive to the intercalation and deintercalation of lithium ions. Therefore, the hard carbon has excellent charging and discharging performance, good rate performance and cycle stability, and a fast charging and discharging capability. The first carbon material further includes a part of artificial graphite in terms of the method of formation. The second carbon material includes soft carbon. The soft carbon refers to an amorphous carbon material that can be graphitized at a high temperature of 2500°C or above. According to different precursor sintering temperatures, the soft carbon will produce three different crystal structures, namely, amorphous structure, turbulent disordered structure, and graphite structure. The graphite structure is common artificial graphite. The amorphous structure has excellent low-temperature performance and good rate performance due to its low crystallinity, large interlayer spacing, and good compatibility with the electrolyte solution. The second carbon material further includes another part of artificial graphite in terms of the method of formation.

A second aspect of the present disclosure further provides a method for preparing a secondary battery, including:
providing a current collector, where the current collector includes a main body and a tab on one side of the main body, the main body has a first region and a second region, and the second region is located between the first region and the tab; and
applying a slurry containing an active material to the first region and the second region of the current collector to form an active material layer, where the slurry containing the active material includes a silicon-based material and a carbon-containing material, the carbon-containing material includes a first carbon material and a second carbon material, and a reversible gram capacity of the first carbon material is less than a reversible gram capacity of the second carbon material; and the active material layer includes a first active material layer and a second active material layer, the first active material layer is located in the first region, the second active material layer is located in the second region, the percentage by weight of the silicon-based material in the second active material layer is greater than the percentage by weight of the silicon-based material in the first active material layer, and the percentage by weight of the first carbon material in the second active material layer is greater than the percentage by weight of the first carbon material in the first active material layer.

In embodiments of the present disclosure, the secondary battery of the first aspect can be formed by the method, so the method has at least the same advantages as the secondary battery of the first aspect.

In an embodiment, the applying the slurry containing the active material to the first region and the second region of the current collector to form the active material layer includes:
applying a base slurry to the current collector to form a base layer, where the base layer is located in the first region and the second region; and
applying a supplemental slurry to a side of the base layer of the second region facing away from the current collector to form a supplementary layer, where the percentage by weight of the silicon-based material in the supplementary layer is greater than the percentage by weight of the silicon-based material of the base layer, and the percentage by weight of the first carbon material in the supplementary layer is greater than the percentage by weight of the first carbon material of the base layer. The arrangement of the supplementary layer can increase the contents of the silicon-based material and the first carbon material in the second region.

In an embodiment, the applying the slurry containing an active material to the first region and the second region of the current collector to form the active material layer includes:
applying a base slurry to the current collector to form a base layer, where the base layer is located in the first region and the second region; and
applying an additional slurry on a side of the base layer facing away from the current collector to form an additional layer, where the additional layer covers a side of the base layer close to the tab, a portion of the additional layer covering the side of the base layer close to the tab is located in the second region, the percentage by weight of the silicon-based material of the additional slurry is greater than the percentage by weight of the silicon-based material of the base slurry, and the percentage by weight of the first carbon material of the additional slurry in the carbon-containing material is greater than the percentage by weight of the first carbon material of the base slurry in the carbon-containing material.

In embodiments of the present disclosure, by adopting a coating method of two or more layers, the percentages by weight of the silicon-based material and the first carbon material in the base slurry and the additional slurry can be controlled. In addition, the additional slurry covers the end portion of the base layer close to the tab, and the additional slurry is located in the second region, so that the additional slurry forms an additional layer. As such, the difference between the content of the silicon-based material per unit area in the second region and the content of the silicon-based material per unit area in the first region and the difference between the content of the second carbon material per unit area in the second region and the content of the second carbon material per unit area in the first region can be reduced, so that the occurrence of lithium plating caused by the smaller thickness of the second region due to the preparation process can be alleviated.

In an embodiment, after the applying the additional slurry on the side of the base layer facing away from the current collector to form the additional layer, the method further includes applying a supplemental slurry to a side of the additional layer of the second region facing away from the current collector to form a supplementary layer. The arrangement of the supplementary layer can increase the contents of the silicon-based material and the first carbon material in the second region.

A third aspect of the present disclosure further provides an electrical device, including the secondary battery of the first aspect and/or a secondary battery prepared by the method of the second aspect. Because the electrical device of the present disclosure includes the secondary battery provided by the present disclosure, the electrical device has at least the same advantages as the secondary battery. Embodiments of the present disclosure include the secondary battery of the first aspect or the secondary battery of the second aspect, so that the electrical device of the present disclosure has at least the advantages of the secondary battery of the first aspect and/or the advantages of the secondary battery prepared by the method of the second aspect.

The above description is only a summary of the technical solutions of the present disclosure. To make the technical means of the present disclosure clearer and implementable in accordance with the disclosure of the specification, and to make the above objectives, features and advantages of the present disclosure more comprehensible, specific implementations of the present disclosure are provided below.

### BRIEF DESCRIPTION OF THE DRAWINGS

FIG. 1 is a schematic structural diagram of an embodiment of a related negative electrode;
FIG. 2 is a schematic structural diagram of an embodiment of a current collector according to the present disclosure;
FIG. 3a is a schematic structural diagram of an embodiment of a negative electrode according to the present disclosure;
FIG. 3b is a schematic structural diagram of another embodiment of a negative electrode according to the present disclosure;
FIG. 4 is a schematic structural diagram of an embodiment of a secondary battery according to the present disclosure;
FIG. 5 is a schematic structural exploded view of an embodiment of a battery pack according to the present disclosure; and
FIG. 6 is a partial schematic structural diagram of an embodiment of a vehicle according to the present disclosure.

10. secondary battery; 11. cell assembly; 12. end cover; 12a. electrode terminal; 13. housing; 20. box body; 21. first portion; 22. second portion; 100. battery pack; 200. controller; 300. motor; 1000. vehicle . 14. negative electrode; 141. current collector; 142. active material layer; 1411. main body portion; 1414. tab; 1412. first region; 1413. second region; 1421. first active material layer; 1422. second active material layer; 1423. first surface; 1424. second surface; 1425. first sub-region; 1426. second sub-region; 143. base layer; 144. additional layer; 146. supplementary layer.

### DETAILED DESCRIPTION

Embodiments of a secondary battery, a battery, and an electrical device of the present disclosure will be specifically disclosed in detail below as appropriate with reference to the accompanying drawings. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the accompanying drawings and the following descriptions are provided for those skilled in the art to fully understand the present disclosure, and are not intended to limit the subject matter described in the claims.

A "range" disclosed in the present disclosure is defined in a form of a lower limit and an upper limit. A given range is defined by selecting a lower limit and an upper limit, and the selected lower limit and upper limit define boundaries of a particular range. A range defined in this manner may be inclusive or exclusive of end values, and may be arbitrarily combined, i.e., any lower limit may be combined with any upper limit to form a range. For example, if a range of 60 to 120 and a range of 80 to 110 are listed for a particular parameter, it is understood that a range from 60 to 110 and a range from 80 to 120 are also contemplated. In addition, if minimum range values of 1 and 2 are listed and maximum range values of 3, 4, and 5 are listed, the following ranges are all contemplated: 1 to 3, 1 to 4, 1 to 5, 2 to 3, 2 to 4, and 2 to 5. In the present disclosure, unless otherwise specified, a numerical range "a to b" represents an abbreviated representation of any combination of real numbers between a to b, where both a and b are real numbers. For example, a numerical range "0 to 5" represents that all real numbers between "0 to 5" have been listed in this specification, and "0 to 5" is just an abbreviated representation of a combination of these numerical values. In addition, when it is stated that a parameter is an integer greater than or equal to 2, it is equivalent to disclosing that the parameter is, for example, an integer such as 2, 3, 4, 5, 6, 7, 8, 9, 10, 11, and 12.

Unless otherwise specified, all embodiments and optional embodiments of the present disclosure may be combined with each other to form new technical solutions.

Unless otherwise specified, all technical features and optional technical features of the present disclosure may be combined with each other to form new technical solutions.

Unless otherwise specified, all steps of the present disclosure may be performed sequentially or randomly, and preferably sequentially. For example, the phrase "the method includes step (a) and step (b)" means that the method may include step (a) and step (b) performed sequentially, or may include step (b) and step (a) performed sequentially. For example, the phrase "the method may further include step (c)" means that step (c) may be added to the method in any order. For example, the method may include step (a), step (b), and step (c), or may include step (a), step (c), and step (b), or may include step (c), step (a), and step (b).

Unless otherwise specified, the terms such as "include", "comprise", and their variants mentioned in the present disclosure may be open-ended or closed-ended. For example, the terms such as "include", "comprise", and their variants may mean that other components not listed may be further included or comprised, or only the listed components may be included or comprised.

Unless otherwise specified, the term "or" is inclusive in the present disclosure. For example, a phrase "A or B" means "A, B, or both A and B". More specifically, the condition "A or B" is satisfied when any one of the following conditions is satisfied: A is true (or present) and B is false (or absent); A is false (or absent) and B is true (or present); or both A and B are true (or present).

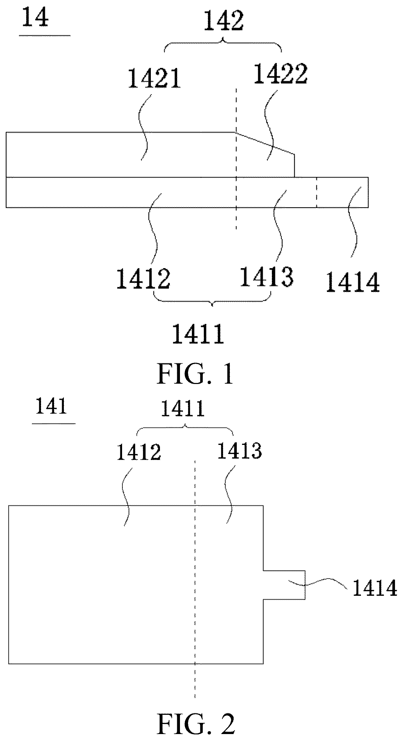

As shown in FIG. 1, during electrode preparation, a slurry containing an active material is generally coated on a current collector 141, which is then dried to form an electrode. However, due to the impact of the coating process, an active material layer 142 formed in a region of the electrode close to the pole tab 1414 is likely to have a small thickness, i.e., as shown in the figure, a second active material layer 1422 is thinner than a first active material layer 1421. Consequently, during charging and discharging of a battery, the charge density in the region of the negative electrode close to the tab 1414 is high, and lithium dendrites are likely to be formed in a region of a negative electrode close to the tab 1414, affecting the cycle performance of the battery. In addition, it is of great significance to improve the rapid charging and discharging performance of secondary batteries.

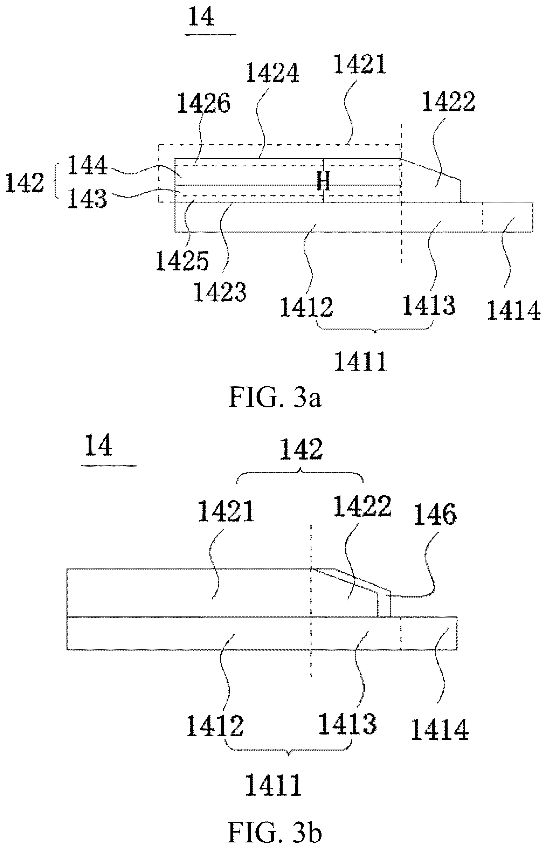

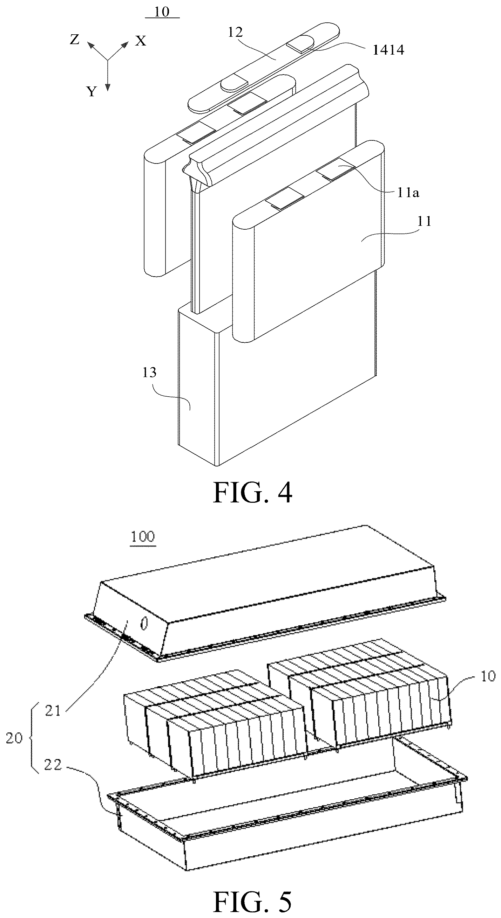

Based on this, as shown in FIG. 2, FIG. 3a, and FIG. 3b, a first aspect of the present disclosure provides a secondary battery 10 (see FIG. 4), including a negative electrode 14. The negative electrode 14 includes a current collector 141 and an active material layer 142 arranged on a surface of the current collector 141. The active material layer 142 includes a silicon-based material and a carbon-containing material. The carbon-containing material includes a first carbon material. The current collector 141 includes a main body portion 1411 and a tab 1414 located on one side of the main body portion 1411. The main body portion 1411 includes a first region 1412 and a second region 1413. The second region 1413 is located between the first region 1412 and the tab 1414. The active material layer 142 includes a first active material layer 1421 and a second active material layer 1422. The first active material layer 1421 is located in the first region 1412. The second active material layer 1422 is located in the second region 1413. The percentage by weight of the silicon-based material in the second active material layer 1422 is greater than the percentage by weight of the silicon-based material in the first active material layer 1421. The percentage by weight of the first carbon material in the second active material layer 1422 is greater than the percentage by weight of the first carbon material in the first active material layer 1421.

In embodiments of the present disclosure, the active material layer 142 of the negative electrode 14 includes a silicon-based material and a carbon-containing material, and the capacity of the negative electrode 14 can be increased by adding a high-capacity silicon-based material to the carbon-containing material. In embodiments of the present disclosure, first, by setting the percentage by weight of the silicon-based material in the second active material layer 1422 to be greater than the percentage by weight of the silicon-based material in the first active layer, the capacity per unit volume of the active material layer 142 in the region of the negative electrode 14 close to the tab 1414 (i.e., the second region 1413) is higher than that in the main body region (i.e., the first region 1412), the capacity of the second region 1413 can be improved, and the difference in capacity per unit area between the second region 1413 and the first region 1412 can be significantly reduced. Secondly, the expansion coefficient of the silicon-based material is greater than that of the carbon-containing material, and by setting the percentage by weight of the silicon-based material in the second region 1413 to be higher than the percentage by weight in the first region 1412, the expansion degree of the second active material layer 1422 in the second region 1413 is greater than the expansion degree of the first active material layer 1421 in the first region 1412 during charging and discharging, so that the porosity and the specific surface area of the second active material layer 1422 in the second region 1413 are increased more significantly, and the contact area between the second active material layer 1422 and the electrolyte solution is increased. This can improve the transport capacity of lithium ions, reduce the occurrence of lithium ion precipitation in the second region 1413, and alleviate the occurrence of lithium plating in the second region 1413 of the negative electrode 14. Thirdly, due to the high lithium intercalation potential of the silicon-based material, the potential of the electrode is higher during charging, which significantly improves the fast charging capability of the negative electrode 14. In embodiments of the present disclosure, the carbon-containing material includes a first carbon material, which is a fast-charging high-dynamic carbon material, so that the fast-charging capability of the second region 1413 can be improved. In embodiments of the present disclosure, by controlling the percentage by weight of the silicon-based material in the second active material layer 1422 to be greater than the percentage by weight of the silicon-based material in the first active material layer 1421 and controlling the percentage by weight of the first carbon material in the second active material layer 1422 to be greater than the percentage by weight of the first carbon material in the first active material, the capacity of the second region 1413 and the charging speed of the second region 1413 can be improved. The secondary battery 10 according to embodiments of the present disclosure can improve the capacity and fast charging capability of the negative electrode 14, and alleviate lithium plating in a local region of the negative electrode 14. As such, the overall fast charging capability and cycle stability of the secondary battery can be improved.

In some embodiments, a ratio of the percentage by weight of the silicon-based material in the second active material layer 1422 to the percentage by weight of the silicon-based material in the first active material layer 1421 is greater than 1:1 and less than or equal to 80:1. In embodiments of the present disclosure, by controlling the ratio of the percentage by weight of the silicon-based material in the second active material layer 1422 to the percentage by weight of the silicon-based material in the first active material layer 1421 to be within the above range, the difference in capacity per unit area between the second active material layer 1422 and the first active material layer 1421 can be reduced, thereby alleviating the precipitation of lithium dendrites in the second active material layer 1422 and improving the fast charging capability of the second active material layer 1422. The ratio of the percentage by weight of the base material in the second active material layer 1422 to the percentage by weight of the silicon-based material in the first active material layer 1421 may be 1.1:1, 1.5:1, 1.8:1, 2:1, 5:1, 10:1, 30:1, 50:1, 80:1, etc., or a range formed by any two of the above values, for example, 1.1:1 to 2:1, 2:1 to 50:1, 50:1 to 80:1, etc.

In some embodiments, a ratio of the percentage by weight of the silicon-based material in the second active material layer 1422 to the percentage by weight of the silicon-based material in the first active material layer 1421 is greater than 1:1 and less than or equal to 80:1. In embodiments of the present disclosure, by controlling the ratio of the percentage by weight of the silicon-based material in the second active material layer 1422 to the percentage by weight of the silicon-based material in the first active material layer 1421 to be within the above range, the difference in capacity per unit area between the second active material layer 1422 and the first active material layer 1421 can be reduced, thereby alleviating the precipitation of lithium dendrites in the second active material layer 1422 and improving the fast charging capability of the second active material layer 1422. The ratio of the percentage by weight of the base material in the second active material layer 1422 to the percentage by weight of the silicon-based material in the first active material layer 1421 may be 1.1:1, 1.5:1, 1.8:1, 2:1, 5:1, 10:1, 30:1, 50:1, 80:1, etc., or a range formed by any two of the above values, for example, 1.1:1 to 2:1, 2:1 to 50:1, 50:1 to 80:1, etc.

In some embodiments, a ratio of the percentage by weight of the silicon-based material in the second active material layer 1422 to the percentage by weight of the silicon-based material in the first active material layer 1421 is greater than or equal to 1.3 and less than or equal to 30:1. In embodiments of the present disclosure, by controlling the ratio of the percentage by weight of the silicon-based material in the second active material layer 1422 to the percentage by weight of the silicon-based material in the first active material layer 1421 to be within the above range, the difference in capacity per unit area between the second active material layer 1422 and the first active material layer 1421 can be reduced, thereby alleviating the local precipitation of lithium dendrites in the negative electrode 14. As such, the difference in fast charging capability between the second active material layer 1422 and the first active material layer 1421 is small, and large capacity and high stability of the second active material layer 1422 are achieved. The ratio of the percentage by weight of the silicon-based material in the second active material layer 1422 to the percentage by weight of the silicon-based material in the first active material layer 1421 may be 1.3:1, 2:1, 5:1, 8:1, 10:1, 18:1, 20:1, 30:1, etc., or a range formed by any two of the above values, for example, 1.3:1 to 8:1, 8:1 to 18:1, 18:1 to 30:1, etc.

In some embodiments, the percentage by weight of the silicon-based material in the first active material layer 1421 ranges from 0.5% to 30%, optionally from 1% to 20%. In embodiments of the present disclosure, by controlling the percentage by weight of the silicon-based material in the first active material layer 1421 to be within the above range, a satisfactory reversible gram capacity of the first active material layer 1421 of the negative electrode 14 is achieved, thereby enabling the secondary battery 10 to have a high energy density, and high stability of the first active material layer 1421 is achieved, thereby enabling the secondary battery 10 to have good cycle performance. The percentage by weight of the silicon-based material in the first active material layer 1421 may be 0.5%, 1%, 1.48%, 1.5%, 1.8%, 2%, 5%, 8%, 10%, 12%, 13%, 15%, 18%, 20%, 22%, 25%, 26%, 30%, etc., or a range formed by any two of the above values, for example, 0.5% to 1%, 1% to 1.48%, 1.48% to 8%, 8% to 13%, 13% to 20%, 20% to 30%, etc.

In some embodiments, the percentage by weight of the silicon-based material in the second active material layer 1422 ranges from 1% to 40%, optionally from 1.5% to 30%. In embodiments of the present disclosure, by controlling the percentage by weight of the silicon-based material in the second active material layer 1422 so that the percentage by weight of the silicon-based material in the second active material layer 1422 is greater than the percentage by weight of the silicon-based material in the first active material layer 1421, a satisfactory reversible gram capacity and high stability of the second active material layer 1422 are achieved. As such, the capacity per unit volume of the second active material layer 1422 in the second region 1413 is greater than the capacity per unit volume of the first active material layer 1421 in the first region 1412, thereby reducing the occurrence of lithium plating in the second region 1413 of the secondary battery 10. The percentage by weight of the silicon-based material in the second active material layer 1422 may be 1%, 1.48%, 1.5%, 1.8%, 2%, 5%, 8%, 10%, 12%, 13%, 15%, 18%, 20%, 22%, 25%, 26%, 28%, 30%, 31%, 34%, 35%, 38%, 40%, etc., or a range formed by any two of the above values, for example, 1% to 1.5%, 1.5% to 13%, 13% to 20%, 20% to 28%, 28% to 30%, 30% to 40%, etc.

In some embodiments, in the second region 1413, the percentage by weight of the first carbon material in the carbon-containing material ranges from 40% to 100%, optionally from 50% to 90%. In embodiments of the present disclosure, by controlling the percentage by weight of the first carbon material in the carbon-containing material in the second region 1413, the content of the first carbon material in the second region 1413 is satisfactory, so that the second active material layer 1422 in the second region 1413 has high stability and good fast charging performance. The percentage by weight of the first carbon material in the carbon-containing material in the second region 1413 may be 40%, 50%, 55%, 60%, 70%, 80%, 85%, 90%, 98%, 100%, etc., or a range formed by any two of the above values, for example, 40% to 50%, 50% to 70%, 70% to 90%, 90% to 100%, etc.

In some embodiments, in the first region 1412, the percentage by weight of the first carbon material in the carbon-containing material ranges from 20% to 80%, optionally from 30% to 70%. In embodiments of the present disclosure, by controlling the percentage by weight of the first carbon material in the carbon-containing material in the first region 1412, the content of the first carbon material in the first region 1412 is satisfactory, so that the difference in fast charging performance of the active material per unit area between the first region 1412 and the second region 1413 is small, thereby improving the fast charging ability and stability of the negative electrode 14. The percentage by weight of the first carbon material in the carbon-containing material in the first region 1412 may be 20%, 30%, 40%, 50%, 60%, 68%, 70%, 78%, 80%, etc., or a range formed by any two of the above values, for example, 20% to 30%, 30% to 40%, 40% to 70%, 70% to 80%, or the like.

In some embodiments, the percentage by weight of the first carbon material in the second active material layer 1422 in the second region 1413 ranges from 24% to 96%, optionally from 35% to 89%. In embodiments of the present disclosure, by controlling the percentage by weight of the first carbon material in the second active material layer 1422 in the second region 1413 to be within the above range, the content of the first carbon material in the second active material layer 1422 in the second region 1413 is satisfactory, so that the second active material layer 1422 in the second region 1413 has high stability and good fast charging performance. However, the percentage by weight of the first carbon material in the second active material layer 1422 in the second region 1413 may be 24%, 30%, 35%, 40%, 50%, 60%, 68%, 70%, 78%, 80%, 89%, 90%, 96%, etc., or a range formed by any two of the above values, for example, 24% to 35%, 35% to 60%, 60% to 80%, 80% to 89%, 89% to 96%, etc.

In some embodiments, in the first region 1412, the percentage by weight of the first carbon material in the first active material layer 1421 ranges from 14% to 79%, optionally from 24% to 69%. By controlling the percentage by weight of the first carbon material in the first active material layer 1421 in the first region 1412 to be within the above range, the content of the first carbon material in the first active material layer 1421 in the first region 1412 is satisfactory, so that the second active material layer 1422 in the first region 1412 has high stability and good fast charging performance. The percentage by weight of the first carbon material in the first active material layer 1421 in the first region 1412 may be 14%, 18%, 20%, 24%, 30%, 35%, 40%, 50%, 60%, 69%, 70%, 78%, 79%, etc., or a range formed by any two of the above values, for example, 14% to 24%, 24% to 60%, 60% to 69%, 69% to 79%, etc.

In some embodiments, the carbon-containing material includes a second carbon material, and a reversible gram capacity of the first carbon material is less than a reversible gram capacity of the second carbon material. In embodiments of the present disclosure, the second carbon material is a high-capacity carbon material, the first carbon material is a fast-charging carbon material, and by controlling the contents of the first carbon material and the second carbon material, the capacity and fast-charging performance of the secondary battery can be controlled to a certain extent.

In some embodiments, the reversible gram capacity of the first carbon material ranges from 320 mAh/g to 370 mAh/g, optionally from 330 mAh/g to 360 mAh/g. In embodiments of the present disclosure, when the reversible gram capacity of the first carbon material is within the above range, the formed negative electrode 14 has a large reversible gram capacity and high stability. The reversible gram capacity of the first carbon material may be 320 mAh/g, 330 mAh/g, 340 mAh/g, 350 mAh/g, 355 mAh/g, 358 mAh/g, 360 mAh/g, 365 mAh/g, 368 mAh/g, 370 mAh/g, etc., or a range formed by any two of the above values, for example, 320 mAh/g to 330 mAh/g, 330 mAh/g to 340 mAh/g, 340 mAh/g to 350 mAh/g, 350 mAh/g to 360 mAh/g, 360 mAh/g to 370 mAh/g, etc.

In some embodiments, the reversible gram capacity of the second carbon material ranges from 340 mAh/g to 390 mAh/g, optionally from 350 mAh/g to 380 mAh/g. In embodiments of the present disclosure, when the reversible gram capacity of the second carbon material is within the above range, the formed negative electrode 14 has a large reversible gram capacity and high stability. The reversible gram capacity of the second carbon material may be 340 mAh/g, 350 mAh/g, 360 mAh/g, 365 mAh/g, 370 mAh/g, 375 mAh/g, 378 mAh/g, 380 mAh/g, 390 mAh/g, etc., or a range formed by any two of the above values, for example, 340 mAh/g to 350 mAh/g, 350 mAh/g to 360 mAh/g, 360 mAh/g to 370 mAh/g, 370 mAh/g to 380 mAh/g, 380 mAh/g to 390 mAh/g, etc.

In some embodiments, a volume mean particle size Dv50 of the first carbon material is smaller than a volume mean particle size Dv50 of the second carbon material. In embodiments of the present disclosure, the volume mean particle size Dv50 of the first carbon material is smaller than the volume mean particle size Dv50 of the second carbon material, the specific surface area of the first carbon material is larger, and lithium ions can migrate through more channels and shorter paths during charging and discharging, so the fast charging capability of the first carbon material is greater than the fast charging capability of the second carbon material. The volume mean particle size Dv50 of the second carbon material is larger, and the second carbon material has a smaller specific surface area, higher compaction density, and larger capacity, so the reversible gram capacity of the second carbon material is greater than the reversible gram capacity of the first carbon material.

In some embodiments, the volume mean particle size DV50 of the first carbon material is greater than or equal to 1 µm and less than or equal to 15 µm. In embodiments of the present disclosure, by controlling the volume mean particle size DV50 of the first carbon material to be within the above range, the fast charging performance of the first carbon material is satisfactory. In an embodiment of the present disclosure, the volume mean particle size DV50 of the first carbon material may be 1 µm, 1.8 µm, 2 µm, 5 µm, 7 µm, 8 µm, 10 µm, 13 µm, 14 µm, 14.9 µm, etc., or a range formed by any two of the above values, for example, 1 µm to 7 µm, 7 µm to 13 µm, 13 µm to 15 µm, etc.

In some embodiments, the volume mean particle size DV50 of the second carbon material is greater than or equal to 7 µm and less than or equal to 22 µm. In embodiments of the present disclosure, by controlling the volume mean particle size DV50 of the first carbon material to be within the above range, the reversible gram capacity performance of the second carbon material is satisfactory. In embodiments of the present disclosure, the volume mean particle size DV50 of the second carbon material may be 7 µm, 8 µm, 9 µm, 10 µm, 13 µm, 14 µm, 15 µm, 18 µm, 20 µm, 21 µm, 21.9 µm, etc., or a range formed by any two of the above values, for example, 7 µm to 13 µm, 13 µm to 15 µm, 15 µm to 22 µm, etc.

In some embodiments, a ratio of an area of the second region 1413 to an area of the first region 1412 is (3-20):100. In embodiments of the present disclosure, by controlling the ratio of the area of the second region 1413 to the area of the first region 1412 to be within the above range so that the contents of the silicon-based material and the first carbon material in the first region 1412 and the second region 1413 of the negative electrode 14 are appropriate, lithium plating in the second region 1413 of the negative electrode 14 can be well alleviated, and the negative electrode 14 has a high reversible gram capacity and higher stability. The ratio of the area of the second region 1413 to the area of the first region 1412 may be 3:100, 5:100, 8:100, 10:100, 13:100, 15:100, 18:100, 20:100, etc., or any range formed by any two of the above values, for example, (3-10):100, (10-15):100, (15-20):100, etc.

In some embodiments, a ratio of an area of the second region 1413 to an area of the first region 1412 is (5-15):100. In embodiments of the present disclosure, by controlling the ratio of the area of the second region 1413 to the area of the first region 1412 to be within the above range so that the contents of the silicon-based material and the first carbon material in the first region 1412 and the second region 1413 of the negative electrode 14 are appropriate, lithium plating in the second region 1413 of the negative electrode 14 can be well alleviated, and the negative electrode 14 has a high reversible gram capacity and higher stability. The ratio of the area of the second region 1413 to the area of the first region 1412 may be 5:100, 8:100, 10:100, 13:100, 15:100, or a range formed by any two of the above values, for example, (5-8):100, (8-13):100, (13-15):100, etc.

In some embodiments, the secondary battery 10 further includes a positive electrode, a CB value of the second active material layer 1422 is greater than or equal to a CB value of the first active material layer 1421, and the CB value is a ratio of a lithium intercalation capacity of the negative electrode per unit area to a release capacity of the positive electrode 14 per unit area. In embodiments of the present disclosure, by controlling the CB value of the second active material layer 1422 to be greater than or equal to the CB value of the first active material layer 1421, the lithium intercalation capacity per unit area in the second active material layer 1422 is large, and the occurrence of lithium plating in the second region 1413 during charging and discharging of the secondary battery 10 is reduced.

In some embodiments, the first active material layer 1421 includes a first surface 1423 and a second surface 1424, the first surface 1423 is close to the negative electrode current collector 141, the second surface 1424 is away from the negative electrode current collector 141, a thickness of the first active material layer 1421 is defined as H, and the first active material layer 1421 satisfies: a region formed from the first surface 1423 to 0.1H is a first sub-region 1425, a region formed from the second surface 1424 to 0.1H is a second sub-region 1426, and the percentage by weight of the silicon-based material in the second sub-region 1426 is greater than the percentage by weight of the silicon-based material in the first sub-region 1425. In embodiments of the present disclosure, by controlling the percentage by weight of the silicon-based material in the second sub-region 1426 to be greater than the percentage by weight of the silicon-based material in the first sub-region 1425, i.e., controlling the silicon content in the upper surface layer (close to the second surface 1424) to be greater than the lower surface layer (close to the first surface 1423), the silicon content is larger, and the silicon-based material expands during charging and discharging, so that the specific surface area of the active material layer 142 in the first sub-region 1425 of the upper surface is larger, which is conducive to increasing the contact area with the electrolyte solution, thereby increasing the capacity of the negative electrode 14 and improving the charging effect of the negative electrode 14.

In some embodiments, the percentage by weight of the silicon-based material in the first sub-region 1425 is greater than or equal to 0 and less than or equal to 25% based on the total weight of the silicon-based material and the carbon-containing material in the first sub-region 1425. In embodiments of the present disclosure, by controlling the percentage by weight of the silicon-based material in the first sub-region 1425 to be within the above range, the negative electrode 14 has high capacity and high stability. Based on the total weight of the silicon-based material and the carbon-containing material in the first sub-region 1425, the percentage by weight of the silicon-based material in the first sub-region 1425 may be 0, 1%, 2%, 3%, 5%, 8%, 10%, 12%, 13%, 15%, 18%, 20%, 22%, 24%, 25%, etc., or a range formed by any two of the above values, for example, 0 to 8%, 8 to 13%, 13 to 20%, or 20 to 25%.

In some embodiments, the percentage by weight of the silicon-based material in the second sub-region 1426 is greater than or equal to 1% and less than or equal to 35% based on the total weight of the silicon-based material and the carbon-containing material in the second sub-region 1426. In embodiments of the present disclosure, by controlling the percentage by weight of the silicon-based material in the second sub-region 1426 to be within the above range, the negative electrode 14 has high capacity and high stability. Based on the total weight of the silicon-based material and the carbon-containing material in the second sub-region 1426, the percentage by weight of the silicon-based material in the second sub-region 1426 may be 1%, 2%, 3%, 5%, 8%, 10%, 12%, 13%, 15%, 18%, 20%, 25%, 30%, 31.03%, 35%, etc., or a range formed by any two of the above values, for example, 0.99% to 10%, 10% to 13%, 13% to 31.03%, or 31.03% to 35%.

In some embodiments, the percentage by weight of the first carbon material in the carbon-containing material per unit area in the second sub-region 1426 is greater than the percentage by weight of the first carbon material in the carbon-containing material per unit area in the first sub-region 1425. By controlling the percentage by weight of the first carbon material in the carbon-containing material in the second sub-region 1426 to be greater than the percentage by weight of the first carbon material in the carbon-containing material in the first sub-region 1425, the fast charging performance of the negative electrode 14 can be improved.

In some embodiments, the percentage by weight of the first carbon material in the carbon-containing material per unit area in the second sub-region 1426 ranges from 20% to 85%, preferably from 30% to 75%. In embodiments of the present disclosure, by controlling the percentage by weight of the first carbon material in the carbon-containing material in the second sub-region 1426 to be within the above range, the second sub-region 1426 has satisfactory fast charging performance and high stability in embodiments of the present disclosure, so that the fast charging performance of the negative electrode 14 is improved, and the occurrence of lithium plating of the negative electrode 14 is reduced. The percentage by weight of the first carbon material in the carbon-containing material per unit area in the second sub-region 1426 is 20%, 30%, 40%, 50%, 60%, 70%, 75%, 80%, 83%, 85%, etc., or a range formed by any two of the above values, for example, 20% to 30%, 30% to 40%, 40% to 70%, 70% to 75%, 75% to 85%, etc.

In some embodiments, the percentage by weight of the first carbon material in the carbon-containing material per unit area in the first sub-region 1425 ranges from 0 to 75%, preferably from 20% to 65%. In embodiments of the present disclosure, by controlling the percentage by weight of the first carbon material in the carbon-containing material in the first sub-region 1425, the first sub-region 1425 has high capacity and high stability, thereby improving the stability of the negative electrode 14. The percentage by weight of the first carbon material in the carbon-containing material per unit area in the first sub-region 1425 is 0, 10%, 20%, 30%, 40%, 50%, 55%, 58%, 60%, 65%, 68%, 70%, 75%, etc., or a range formed by any two of the above values, for example, 0 to 20%, 20% to 40%, 40% to 65%, 65% to 75%, etc.

In an embodiment, the active material layer 142 includes a base layer 143 and a supplementary layer 146, where the base layer 143 is located in the first region 1412 and the second region 1413; and the supplementary layer 146 is arranged on a side of the base layer 143 of the second region 1413 facing away from the current collector 141, the percentage by weight of the silicon-based material in the supplementary layer 146 is greater than the percentage by weight of the silicon-based material of the base layer 143, and the percentage by weight of the first carbon material in the supplementary layer 146 is greater than the percentage by weight of the first carbon material of the base layer 143. In embodiments of the present disclosure, by providing the supplementary layer 146, the contents of the silicon-based material and the first carbon material in the second region 1413 can be increased, to alleviate the problem caused by the thinning of the second active material layer 142 in the second region 1413 of the negative electrode during battery preparation. As such, the overall fast charging capability and cycle stability of the secondary battery can be improved.

In some embodiments, the active material layer 142 includes a base layer 143 and an additional layer 144, where the additional layer 144 integrally extends to cover a side of the base layer 143 facing away from the current collector 141 and a side of the base layer 143 close to the tab 1414, and a portion of the additional layer 144 covering the side of the base layer 143 close to the tab 1414 is located in the second region 1413. In embodiments of the present disclosure, the active material layer 142 includes two or more layers so that the additional layer 144 covers an end portion of the base layer 143 close to the tab 1414, and by controlling the percentage by weight of the silicon-based material in the additional layer 144 to be greater than the percentage by weight of the silicon-based material in the base layer 143 and the percentage by weight of the first carbon material in the additional layer 144 to be greater than the percentage by weight of the first carbon material in the additional layer 144, the percentage by weight of the silicon-based material in the second region 1413 can be controlled to be greater than the percentage by weight of the silicon-based material in the first region 1412, and the percentage by weight of the first carbon material in the second region 1413 can be controlled to be greater than the percentage by weight of the first carbon material in the first region 1412. In embodiments of the present disclosure, the configuration of the active material layer 142 as a two-layer structure facilitates the preparation of the active material layer 142, and improves the capacity per unit area and the fast charging capacity of the second region 1413 and reduces the occurrence of lithium plating in the second region 1413.

In some embodiments, the active material layer 142 includes a base layer 143, an additional layer 144, and a supplementary layer 146, and can achieve the effects described above, which will not be described in detail herein again. In addition, the arrangement of the base layer 143, the additional layer 144, and the supplementary layer 146 makes it convenient to control process parameters for preparing the base layer 143, the additional layer 144, and the supplementary layer 146, and facilitate the preparation.

In some embodiments, the silicon-based material includes any one or more of silicon, a silicon-carbon composite material, silicon oxide, and a silicon oxide-carbon composite material.

In some embodiments, the carbon-containing material includes graphite. The first carbon material includes hard carbon. The hard carbon refers to a carbon material that is difficult to graphitize at a high temperature of 2500°C or above. The hard carbon includes resin carbon, organic polymer pyrolytic carbon, carbon black, biomass carbon, and the like. The interlayer spacing of the hard carbon is greater than the thickness of a single layer of graphite, and the large interlayer spacing is conducive to the intercalation and deintercalation of lithium ions. Therefore, the hard carbon has excellent charging and discharging performance, good rate performance and cycle stability, and a fast charging and discharging capability. The first carbon material further includes a part of artificial graphite in terms of the method of formation. The second carbon material includes soft carbon. The soft carbon refers to an amorphous carbon material that can be graphitized at a high temperature of 2500°C or above. According to different precursor sintering temperatures, the soft carbon will produce three different crystal structures, namely, amorphous structure, turbulent disordered structure, and graphite structure. The graphite structure is common artificial graphite. The amorphous structure has excellent low-temperature performance and good rate performance due to its low crystallinity, large interlayer spacing, and good compatibility with the electrolyte solution. The second carbon material further includes another part of artificial graphite in terms of the method of formation.

A second aspect of the present disclosure further provides a method for preparing a secondary battery 10, including:

providing a current collector 141, where the current collector 141 includes a main body portion 1411 and a tab 1414 on one side of the main body portion 1411, the main body portion 1411 has a first region 1412 and a second region 1413, and the second region 1413 is located between the first region 1412 and the tab 1414; and
applying a slurry containing an active material to the first region 1412 and the second region 1413 of the current collector 141 to form an active material layer 142, where the slurry containing the active material includes a silicon-based material and a carbon-containing material, the carbon-containing material includes a first carbon material and a second carbon material, and a reversible gram capacity of the first carbon material is less than a reversible gram capacity of the second carbon material; and the active material layer 142 includes a first active material layer 1421 and a second active material layer 1422, the first active material layer 1421 is located in the first region 1412, the second active material layer 1422 is located in the second region 1413, the percentage by weight of the silicon-based material in the second active material layer 1422 is greater than the percentage by weight of the silicon-based material in the first active material layer 1421, and the percentage by weight of the first carbon material in the second active material layer 1422 is greater than the percentage by weight of the first carbon material in the first active material layer 1421.

In embodiments of the present disclosure, the secondary battery 10 of the first aspect can be formed by the method, so the method has at least the same advantages as the secondary battery 10 of the first aspect.

In some embodiments, the applying the slurry containing the active material to the first region 1412 and the second region 1413 of the current collector 141 to form the active material layer 142 includes:
applying a base slurry to the current collector 141 to form a base layer 143, where the base layer 143 is located in the first region 1412 and the second region 1413; and
applying a supplemental slurry to a side of the base layer 143 of the second region 1413 facing away from the current collector 141 to form a supplementary layer 146, where the percentage by weight of the silicon-based material in the supplementary layer 146 is greater than the percentage by weight of the silicon-based material of the base layer 143, and the percentage by weight of the first carbon material in the supplementary layer 146 is greater than the percentage by weight of the first carbon material of the base layer 143. The arrangement of the supplementary layer 146 can increase the contents of the silicon-based material and the first carbon material in the second region 1413. The arrangement of the supplementary layer 146 can increase the contents of the silicon-based material and the first carbon material in the second region 1413.

In some embodiments, the applying the slurry containing the active material to the first region 1412 and the second region 1413 of the current collector 141 to form the active material layer 142 includes:
applying a base slurry to the current collector 141 to form a base layer 143, where the base layer 143 is located in the first region 1412 and the second region 1413; and
applying an additional slurry on a side of the base layer 143 facing away from the current collector 141 to form an additional layer 144, where the additional layer 144 covers a side of the base layer 143 close to the tab 1414, a portion of the additional layer 144 covering the side of the base layer 143 close to the tab 1414 is located in the second region 1413, the percentage by weight of the silicon-based material of the additional slurry is greater than the percentage by weight of the silicon-based material of the base slurry, and the percentage by weight of the first carbon material of the additional slurry in the carbon-containing material is greater than the percentage by weight of the first carbon material of the base slurry in the carbon-containing material.

In some embodiments, after the applying the additional slurry on the side of the base layer 143 facing away from the current collector 141 to form the additional layer, the method further includes applying a supplemental slurry to a side of the additional layer of the second region 1413 facing away from the current collector 141 to form a supplementary layer 146. The arrangement of the supplementary layer 146 can increase the contents of the silicon-based material and the first carbon material in the second region 1413.

In embodiments of the present disclosure, by adopting a coating method of two or more layers, the percentages by weight of the silicon-based material and the first carbon material in the base slurry and the additional slurry can be controlled. In addition, the additional slurry covers the end portion of the base layer 143 close to the tab 1414, and the additional slurry is located in the second region 1413, so that the additional slurry forms an additional layer 144. As such, the difference between the content of the silicon-based material per unit area in the second region 1413 and the content of the silicon-based material per unit area in the first region 1412 and the difference between the content of the second carbon material per unit area in the second region 1413 and the content of the second carbon material per unit area in the first region 1412 can be reduced, so that the occurrence of lithium plating caused by the smaller thickness of the second region 1413 due to the preparation process can be alleviated.

A third aspect of the present disclosure further provides an electrical device, including the secondary battery 10 of the first aspect and/or a secondary battery 10 prepared by the method of the second aspect. Because the electrical device of the present disclosure includes the secondary battery 10 provided by the present disclosure, the electrical device has at least the same advantages as the secondary battery 10. Embodiments of the present disclosure include the secondary battery 10 of the first aspect or the secondary battery 10 of the second aspect, so that the electrical device of the present disclosure has at least the advantages of the secondary battery 10 of the first aspect and/or the advantages of the secondary battery 10 prepared by the method of the second aspect.

In addition, the secondary battery 10, a battery pack 100 (see FIG. 5), and an electrical device of the present disclosure will be described as appropriate with reference to the accompanying drawings.

In embodiments of the present disclosure, the secondary battery 10 further includes an electrolyte solution and a separator. The separator is arranged between the positive electrode and the negative electrode 14, and mainly functions to prevent a short circuit between the positive and negative electrodes and allow ions to pass therethrough. During charging and discharging of the battery, active ions Li⁺ are intercalated and deintercalated back and forth between the positive electrode and the negative electrode 14, and the electrolyte solution functions to conduct ions between the positive electrode and the negative electrode 14.

The positive electrode includes a positive electrode current collector and a positive electrode film layer arranged on at least one surface of the positive electrode current collector. The positive electrode film layer includes a positive electrode active material.

By way of example, the positive electrode current collector has two opposite surfaces in a thickness direction thereof, and the positive electrode film layer is arranged on either or both of the two opposite surfaces of the positive electrode current collector.

In some embodiments, the positive electrode current collector may be a metal foil or a composite current collector 141. For example, the metal foil may be an aluminum foil. The composite current collector 141 may include a polymer material base layer and a metal layer formed on at least one surface of the polymer material base layer. The composite current collector 141 may be formed by forming a metal material (e.g., aluminum, an aluminum alloy, nickel, a nickel alloy, titanium, a titanium alloy, silver, or a silver alloy) on a polymer material substrate (e.g., a substrate of polypropylene (PP), polyethylene terephthalate (PET), polybutylene terephthalate (PBT), polystyrene (PS), or polyethylene (PE)).

In some embodiments, when the secondary battery 10 is a lithium-ion battery, the positive electrode active material may be a positive electrode active material well-known in the art for use in a lithium-ion battery. By way of example, the positive electrode active material may include at least one of the following materials: a lithium-containing phosphate of an olivine structure, lithium transition metal oxide, and modified compounds thereof. However, the present disclosure is not limited to these materials, and other conventional materials that can be used as a positive electrode active material of a battery may also be used. These positive electrode active materials may be used alone or in combination. Examples of the lithium transition metal oxide may include, but are not limited to, at least one of lithium cobalt oxide (e.g., LiCoO₂), lithium nickel oxide (e.g., LiNiO₂), lithium manganese oxide (e.g., LiMnO₂ or LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (or briefly referred to as NCM₃₃₃), LiNi_{0.5}Co_{0.2}Mn_{0.3}O₂ (or briefly referred to as NCM₅₂₃), LiNi_{0.5}Co_{0.25}Mn_{0.25}O₂ (or briefly referred to as NCM₂₁₁), LiNi_{0.6}Co_{0.2}Mn_{0.2}O₂ (or briefly referred to as NCM₆₂₂), or LiNi_{0.8}Co_{0.1}Mn_{0.1}O₂ (or briefly referred to as NCM₈₁₁)), lithium nickel cobalt aluminum oxide (e.g., LiNi_{0.85}Co_{0.15}Al_{0.05}O₂), and modified compounds thereof. Examples of the lithium-containing phosphate of the olivine structure may include, but are not limited to, at least one of lithium iron phosphate (e.g., LiFePO₄ (or briefly referred to as LFP)), a composite material of lithium iron phosphate and carbon, lithium manganese phosphate (e.g., LiMnPO₄), a composite material of lithium manganese phosphate and carbon, lithium iron manganese phosphate, and a composite material of lithium manganese iron phosphate and carbon.

In some embodiments, the positive electrode film layer optionally further includes a binder. By way of example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode film layer further optionally includes a conductive agent. By way of example, the conductive agent may include at least one of superconducting carbon, acetylene black, carbon black, Ketjen black, carbon dots, carbon nanotubes, graphene, and carbon nanofibers.

In some embodiments, the positive electrode may be prepared in the following manner. The components for preparing the positive electrode, such as the positive electrode active material, the conductive agent, the binder, and any other component, are dispersed in a solvent (e.g., N-methylpyrrolidone) to form a positive electrode slurry. The positive electrode slurry is coated on the positive electrode current collector, followed by drying, cold pressing, and other processes, to obtain the positive electrode.

The negative electrode current collector 141 has two opposite surfaces in a thickness direction thereof, and the negative electrode film layer is arranged on either or both of the two opposite surfaces of the negative electrode current collector 141. The active material layer 142 of the negative electrode 14 is arranged on at least one surface of the negative electrode current collector 141.

In some embodiments, the current collector 141 of the negative electrode 14 may be a metal foil or a composite current collector 141. For example, the metal foil may be a copper foil. The composite current collector 141 may include a polymer material base layer and a metal layer formed on at least one surface of the polymer material base layer. The composite current collector 141 may be formed by forming a metal material (e.g., copper, a copper alloy, nickel, a nickel alloy, titanium, a titanium alloy, silver, or a silver alloy) on a polymer material substrate (e.g., a substrate of polypropylene (PP), polyethylene terephthalate (PET), polybutylene terephthalate (PBT), polystyrene (PS), or polyethylene (PE)).

In some embodiments, the active material layer 142 optionally further includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the active material layer 142 further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the active material layer 142 optionally further includes other auxiliary agents, for example, a thickener (e.g., sodium carboxymethyl cellulose (CMC-Na)).

The electrolyte solution functions to conduct ions between the positive electrode and the negative electrode 14. The type of the electrolyte solution is not particularly limited in the present disclosure, and may be selected according to requirements.

In some embodiments, the electrolyte solution includes an electrolyte salt and a solvent.

In some implementations, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some implementations, the solvent may be selected from at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolyte solution optionally further includes an additive. For example, the additive may include a negative electrode film-forming additive and a positive electrode film-forming additive, and may also include an additive that can improve certain properties of the battery, e.g., an additive that improves the overcharge performance of the battery, an additive that improves the high-temperature performance or low-temperature performance of the battery, etc.

In some embodiments, the secondary battery 10 further includes a separator. The type of the separator is not particularly limited in the present disclosure, and any well-known separator of a porous structure having good chemical stability and mechanical stability may be used.

In some embodiments, the material of the separator may be selected from at least one of glass fiber, non-woven cloth, polyethylene, polypropylene, and polyvinylidene fluoride. The separator may be a single-layer film or a multi-layer composite film, which is not particularly limited herein. When the separator is a multi-layer composite film, the layers may be of the same or different materials, which is not particularly limited herein.

In some embodiments, the positive electrode, the negative electrode 14, and the separator may be made into a cell assembly by a winding process or a lamination process.

In some implementations, as shown in FIG. 4, the secondary battery 10 may include an outer package. The outer package may be configured to package the cell assembly 11 and the electrolyte solution. The outer package includes an end cover 12, a housing 13, and other functional components.

The end cover 12 is a member configured to cover an opening of the housing 13 to isolate an internal environment of the secondary battery 10 from an external environment. Without limitation, the shape of the end cover 12 may match the shape of the housing 13 to fit the housing 13. Optionally, the end cover 12 may be made of a material having certain hardness and strength (e.g., aluminum alloy). As such, the end cover 12 is not easily deformed when squeezed or impacted, so that the secondary battery 10 can have higher structural strength and improved safety performance. Functional components such as electrode terminals 12a may be provided on the end cover 12. The electrode terminals 12a may be configured to electrically connect to the cell assembly 11 to output or electric energy from or input electric energy to the secondary battery 10. In some embodiments, the end cover 12 may further be provided with a pressure relief mechanism configured to release an internal pressure of the secondary battery 10 when the internal pressure or temperature of the secondary battery 10 reaches a threshold. The end cover 12 may be made of various materials, such as copper, iron, aluminum, stainless steel, aluminum alloy, plastic, etc., which is not particularly limited in embodiments of the present disclosure. In some embodiments, an insulation member (not shown) may further be arranged on an inner side of the end cover 12. The insulation member may be configured to isolate an electrical connection component in the housing 13 from the end cover 12 to reduce the risk of short circuits. For example, the insulation member may be plastic, rubber, or the like.

The housing 13 is an assembly configured to fit with the end cover 12 to form an internal environment of the secondary battery 10. The formed internal environment may be used for accommodating the cell assembly 11, the electrolyte solution, and other components. The housing 13 and the end cover 12 may be independent members. An opening may be provided on the housing 13, and the end cover 12 may cover the opening to form the internal environment of the secondary battery 10. Without limitation, the end cover 12 and the housing 13 may also be integrated. Specifically, the end cover 12 and the housing 13 may form a common connection surface before other components are inserted into the housing, and the end cover 12 is caused to cover the housing 13 when the interior of the housing 13 needs to be encapsulated. The housing 13 may be of a variety of shapes and sizes, such as a cuboid shape, a cylindrical shape, a hexagonal prism shape, etc. Specifically, the shape of the housing 13 may be determined according to the specific shape and size of the cell assembly 11. The housing 13 may be made of various materials, such as copper, iron, aluminum, stainless steel, aluminum alloy, plastic, etc., which is not particularly limited in embodiments of the present disclosure.

One or more cell assemblies 11 may be contained in the housing 13. A portion of each of the positive electrode and the negative electrode that does not include an active material constitutes a tab 1414. The tab of the positive electrode and the tab of the negative electrode may be located at the same end of the main body portion or may be respectively located at two ends of the main body portion. During charging and discharging of the battery, the positive electrode active material and the negative electrode active material react with the electrolytic solution, and the electrode tabs 1414 are connected to electrode terminals to form a current loop.

Referring to FIG. 5, the battery pack 100 includes a box body 20 and a secondary battery 10. The secondary battery 10 is accommodated in the box body 20. The box body 20 is configured to provide an accommodating space for the secondary battery 10. The box body 20 may be of various structures. In some embodiments, the box body 20 may include a first portion 21 and a second portion 22, the first portion 21 and the second portion 22 are configured to fit with each other, and the first portion 21 and the second portion 22 together define the accommodating space for accommodating the secondary battery 10. The second portion 22 may be a hollow structure having an opening at one end thereof, the first portion 21 may be a plate-like structure, and the first portion 21 covers the side of the second portion 22 with the opening, so that the first portion 21 and the second portion 22 together define the accommodating space. The first portion 21 and the second portion 22 may each be a hollow structure having an opening at one side thereof, and the side of the first portion 21 with the opening covers the side of the second portion 22 with the opening. Of course, the box body 20 formed by the first portion 21 and the second portion 22 may be of various shapes, such as a cylinder, a cuboid, or the like.

The battery pack 100 may include a plurality of secondary batteries 10. The plurality of secondary batteries 10 may be connected in series, in parallel, or in mixed connection. The mixed connection means that the plurality of secondary batteries 10 are connected in series and in parallel. The plurality of secondary batteries 10 may be directly connected in series, parallel, or in mixed connection to form a unity, which is then placed in the box body 20. Alternatively, the plurality of secondary batteries 10 in the battery pack 100 may first be connected in series, parallel, or in mixed connection to form battery modules, and then the battery modules are connected in series, parallel, or in mixed connection to form a unity, which is then placed in the box body 20. The battery pack 100 may further include other structures. For example, the battery pack 100 may further include a bus member configured to implement electrical connection between the plurality of secondary batteries 10.

In an embodiment of the present disclosure, the battery pack 100 includes a lithium-ion battery as the secondary battery 10. In some other embodiments, the battery pack 100 may further include any one or more of a lithium-sulfur battery, a sodium-ion battery, and a magnesium-ion battery, but the present disclosure is not limited thereto. The secondary battery 10 may be of a cylindrical shape, a flat shape, a cuboid shape, etc.

In addition, the present disclosure further provides an electrical device. The electrical device includes at least one of the secondary battery 10 and/or the battery pack 100 of the present disclosure. The secondary battery 10 or the battery pack 100 can be used as a power supply of the electrical device, and can also be used as an energy storage unit of the electrical device. The electrical device may include, but is not limited to, a mobile device (e.g., a mobile phone or a notebook computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, a satellite, an energy storage system, and the like.

Whether to use the secondary battery 10 and/or the battery pack 100 may be determined according to use requirements of the electrical device.

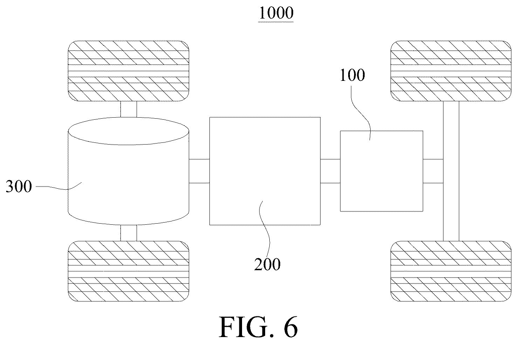

FIG. 6 shows an electrical device as an example. The electrical device is a pure electric vehicle, a hybrid electric vehicle, a plug-in hybrid electric vehicle, or the like. Specifically, a schematic structural diagram of a vehicle 1000 is provided. The vehicle 1000 is equipped therein with a secondary battery 10 (see FIG. 4) or a battery pack 100. The secondary battery 10 or the battery pack 100 may be arranged at the bottom, front side, or rear side of the vehicle 1000. The secondary battery 10 or the battery pack 100 may be configured to supply electric energy to the vehicle 1000. For example, the secondary battery 10 or the battery pack 100 may serve as an operating electricity supply of the vehicle 1000. The vehicle 1000 may further include a controller 200 and a motor 300. The controller 200 is configured to control the secondary battery 10 or the battery pack 100 to supply electric energy to the motor 300 to meet, for example, electricity demands for operation of the vehicle 1000 during starting, navigation, and traveling.

In some embodiments of the present disclosure, the secondary battery 10 or the battery pack 100 not only can serve as an operating electricity supply of the vehicle 1000, but also can serve as a driving electricity supply of the vehicle 1000 to provide driving power to the vehicle 1000 to replace or partially replace fuel oil or natural gas.

Examples of the present disclosure are described below. The embodiments described below are exemplary, and are merely used for explaining the present disclosure, rather than limiting the present disclosure. Where no specific technologies or conditions are indicated in the embodiments, the technologies or conditions described in the literatures in the art or the instructions for the product are followed. The reagents or instruments for which no manufacturers are noted are all common products commercially available from the market.

### Example 1

### 1) Preparation of positive electrode:

Lithium iron phosphate, conductive carbon black (Super-P), and polyvinylidene fluoride (PVDF) were mixed uniformly according to a weight ratio of 90:10:3:1.5 by fully stirring in N-methylpyrrolidone (NMP) to obtain a positive electrode slurry. The positive electrode slurry was uniformly coated on two sides of an aluminum foil, followed by cold pressing and cutting to obtain a positive electrode.

The lithium iron phosphate served as a positive electrode active material, the conductive carbon black (Super-P) served as a conductive agent, polyvinylidene fluoride (PVDF) served as a binder, and N,N-methylpyrrolidone (NMP) served as a slurry solvent.

### 2) Preparation of negative electrode:

In an embodiment of the present disclosure, hard carbon (first carbon material), graphite (second carbon material), nano-silicon, conductive carbon black (Super-P), carbon nanotubes, sodium carboxymethyl cellulose (CMC-Na), and styrene-butadiene rubber (SBR) were mixed uniformly according to a weight ratio of 54.04:13.51:28.95:0.5:0.1:1.1:1.8 by fully stirring in deionized water, to obtain a basic slurry for use in preparation of the negative electrode. During the stirring process, the viscosity could be adjusted by deionized water. Hard carbon (first carbon material), graphite (second carbon material), nano-silicon, conductive carbon black (Super-P), carbon nanotubes, sodium carboxymethyl cellulose (CMC-Na), and styrene-butadiene rubber (SBR) were mixed uniformly according to a weight ratio of 54.04:13.51:28.95:0.5:0.1:1.1:1.8 by fully stirring in deionized water, to obtain an additional slurry for use in preparation of the negative electrode. hard carbon (first carbon material), graphite (second carbon material), nano-silicon, conductive carbon black (Super-P), carbon nanotubes, sodium carboxymethyl cellulose (CMC-Na), and styrene-butadiene rubber (SBR) were mixed uniformly according to a weight ratio of 23.16:34.74:38.6:0.5:0.1:1.1:1.8 by fully stirring in deionized water, to obtain a supplementary slurry for use in preparation of the negative electrode. Then, the base slurry was coated on two sides of the negative electrode current collector according to a certain width, and was dried to form a base layer. The additional slurry was applied to the base layer to form an additional layer. The additional layer covered a surface of the base layer facing away from the current collector to form a first active material layer. The supplementary slurry was applied to the additional layer of the second region, followed by cold pressing and cutting to obtain the negative electrode. In an embodiment of the present disclosure, the negative electrode current collector was a 6 µm thick copper foil. The material and thickness of the negative electrode current collector were not limited in embodiments of the present disclosure.

In an embodiment of the present disclosure, the volume mean particle size DV50 of the hard carbon was 14 µm, and the reversible gram capacity of the hard carbon was 350 mAh/g. The volume mean particle size DV50 of the graphite was 20 µm, and the reversible gram capacity of the graphite was 360 mAh/g.

### 3) Preparation of secondary battery:

The positive electrode, the separator and the negative electrode are wound into a cell assembly, followed by tab welding, packaging with an aluminum shell, liquid injection, packaging, formation, and degassing molding, to obtain a secondary battery. The cell assembly had a width of 148 mm, a thickness of 28 mm, a height of 98 mm, and a capacity of 60 Ah. 1 mol/L LiPF₆ solution was injected as an electrolyte solution. The solvent of the LiPF₆ solution was ethylene carbonate (EC) and dimethyl carbonate (DMC). The volume ratio of ethylene carbonate (EC) and dimethyl carbonate (DMC) was 1:2. In an embodiment of the present disclosure, the separator was a 7 µm thick polyethylene (PE) film. In an embodiment of the present disclosure, the energy density of the negative electrode active material of the negative electrode was 1.07 times the energy density of the positive electrode active material of the positive electrode.

A secondary battery obtained in an embodiment of the present disclosure included a positive electrode and a negative electrode. The negative electrode included a current collector and an active material layer arranged on a surface of the current collector. The active material layer included a silicon-based material and a carbon-containing material. The carbon-containing material included a first carbon material and a second carbon material. The reversible gram capacity of the first carbon material was less than the reversible gram capacity of the second carbon material. The current collector included a main body portion and a tab located on one side of the main body portion. The main body portion included a first region and a second region. The second region was located between the first region and the tab. In an embodiment of the present disclosure, the ratio of the area of the second region to the area of the first region was 10:100. In an embodiment of the present disclosure, the active material layer included a first active material layer and a second active material layer, the first active material layer was located in the first region, and the second active material layer was located in the second region; the percentage by weight of the silicon-based material in the second active material layer was greater than the percentage by weight of the silicon-based material in the first active material layer; and the percentage by weight of the first carbon material (hard carbon) in the second active material layer was greater than the percentage by weight of the first carbon material in the first active material layer. The CB value of the first active material layer was 1.07.

### Comparative Example 1

The secondary battery and the method for preparing the secondary battery in this comparative example were different from Example 1 in that in the method for preparing the negative electrode, a negative electrode active material, a conductive agent, a thickener, and a binder were mixed with deionized water to form a slurry, and the slurry was coated on two sides of the negative electrode current collector according to a certain width, followed by cold pressing and cutting to obtain a negative electrode. The negative electrode of the obtained secondary battery included a positive electrode and a negative electrode. The negative electrode included a current collector and an active material layer arranged on a surface of the current collector. The active material layer included a silicon-based material and a carbon-containing material. The carbon-containing material included a first carbon material (hard carbon) and a second carbon material (soft carbon). The current collector included a main body portion and a tab located on one side of the main body portion. The main body portion included a first region and a second region. The second region was located between the first region and the tab. The active material layer included a first active material layer and a second active material layer. The first active material layer was located in the first region. The second active material layer was located in the second region. The percentage by weight of the silicon-based material in the second active material layer was equal to the percentage by weight of the silicon-based material in the first active material layer. The percentage by weight of the first carbon material in the second active material layer was equal to the percentage by weight of the first carbon material in the first active material layer. The CB value of the first active material layer was 1.07. Other aspects of this comparative example were the same as those of Example 1, so the details will not be repeated herein.

### Comparative Example 2

Different from Comparative Example 1, the negative electrode active material included a silicon-based material and a carbon-containing material, and the carbon-containing material included a second carbon material (soft carbon) and did not include a first carbon material (hard carbon). Other aspects of this comparative example were the same as those of Comparative Example 1, so the details will not be repeated herein.

### Comparative Example 3

Different from Comparative Example 1, the negative electrode active material included a silicon-based material and a carbon-containing material, and the carbon-containing material included a first carbon material and did not include a second carbon material. Other aspects of this comparative example were the same as those of Comparative Example 1, so the details will not be repeated herein.

Related tests were performed on the secondary batteries of Examples 1 to 14 and Comparative Examples 1 to 3.
1) Performance test of battery: Specifically, the cycle capacity retention rate of each secondary battery was tested. Specific test conditions were as follows:
   At 25°C, the battery was charged at a constant current of 1/3 nominal capacity Cₙₒₘᵢₙₐₗ to a cut-off voltage of 3.8 V, then charged at a constant voltage to 0.05 Cₙₒₘᵢₙₐₗ, allowed to stand for 5 minutes, and then discharged at 1/3 Cₙₒₘᵢₙₐₗ to a discharge cut-off voltage of 2.0 V, to obtain discharge energy E and capacity C. The obtained capacity was recorded as an initial capacity C0. The above steps were repeatedly performed for the same secondary battery. The discharge capacity of the battery after the n^{th} cycle was recorded as Cn. The battery capacity retention rate after each cycle was Pn=Cn/CO×100%. During the test, the first cycle corresponds to n=1, the second cycle corresponds to n=2, ..., and the 1500^{th} cycle corresponds to n=1500. The corresponding capacity retention rate data of the batteries in Table 1 was data measured after 1500 cycles under the above test conditions.

### 2) Lithium plating test:

At 25°C, the battery was charged at a constant current of 1/3 nominal capacity Cₙₒₘᵢₙₐₗ to a cut-off voltage of 3.8 V, then charged at a constant voltage to 0.05 Cₙₒₘᵢₙₐₗ, allowed to stand for 5 minutes, and then discharged at 1/3 Cₙₒₘᵢₙₐₗ to a discharge cut-off voltage of 2.0 V, to obtain discharge energy E and capacity C. The obtained capacity was recorded as an initial capacity C0. The above steps were repeatedly performed for the same secondary battery. After 1500 cycles, the battery was charged to 3.8 V, and the battery was disassembled to observe whether lithium plating occurred on the surface of the negative electrode.

### 3) Capacity test

At 25°C, the battery was charged at a constant current of 1/3 nominal capacity Cₙₒₘᵢₙₐₗ to a cut-off voltage of 3.8 V, then charged at a constant voltage to 0.05 Cₙₒₘᵢₙₐₗ, allowed to stand for 5 minutes, and then discharged at 1/3 Cₙₒₘᵢₙₐₗ to a discharge cut-off voltage of 2.0 V, to obtain discharge energy E and capacity C.

### 4) Charging time test:

The battery was charged with stepwise decreasing current or continuously decreasing current at 35°C. The state of charge (SOC) of the battery ranged from 10% SOC to 80% SOC. The boundary condition was an anode potential of greater than 0 mV. The equipment was Sunway charging and discharging machine. The specific test process was as follows. 1. During the battery preparation process, a lithium-plated copper wire was placed outside a wound bare cell, and wrapped with an separator to prevent the copper wire from electrically connecting to an electrode or housing. The copper wire was led out of the cell to serve as a third electrode. 2. The discharge capacity of the prepared battery was first tested by the following capacity test method. 3. The voltage between the third electrode and the negative electrode, i.e., "anode potential", was recorded using a voltage acquisition device. 4. The initial SOC of the battery was adjusted to 10%. Then, the battery was charged. The initial charging rate was set to 3 C. When the anode potential decreased to 0 mV, the equipment automatically reduced the charging rate to 3-x C, and continued to charge; when the anode potential decreased to 0 mV, the equipment continued to reduce the charging rate to 3-2*x C; ... This method is called charging with stepwise decreasing current. After the battery was charged to 80% SOC, when x was small enough, e.g., 0.05 C. the charging may be considered to be equivalent to charging with continuously decreasing current. Finally, the total time taken by charging from 10% SOC to 80% SOC was recorded.

### 5) Volume average particle size Dv50 test.

Equipment model: MasterSizer 3000 laser particle size analyzer. The test was performed following the standard procedure described in GB/T19077-2016/ISO 13320:2009. The specific test procedure was as follows. An appropriate amount of a sample to be tested was taken (as long as the sample concentration could ensure 8% to 12% shading), followed by addition of 20 mL of deionized water, and ultrafast charging of 5 min (53 KHz/120 W) to ensure that the sample was completely dispersed. Then, the sample was tested according to GB/T19077 -2016/ISO 13320:2009.

The process parameters and performance of the examples and comparative examples were as shown in Tables 1 and 2 below.

**Table 1: Parameters and performance test results of Examples 1 to 14 and Comparative Examples 1 to 3**

| | X2 (%) | X1 (%) | B | C2 (%) | C1 (%) | M2 (%) | M1 (%) | First CB value | Lithium plating | Capacity (Ah) | Charging time (min) | Cycle capacity retention rate (%) |
|---|---|---|---|---|---|---|---|---|---|---|---|---|
| Example 1 | 40 | 30 | 1.3:1 | 24 | 14 | 40 | 20 | 1.27 | No | 35 | 19.5 | 80 |
| Example 2 | 30 | 20 | 1.5:1 | 35 | 24 | 50 | 30 | 1.32 | No | 34 | 19 | 85 |
| Example 3 | 16 | 10 | 1.6:1 | 67 | 61.5 | 79 | 68 | 1.27 | No | 33 | 17 | 88 |
| Example 4 | 1.5 | 1 | 1.5:1 | 89 | 69 | 90 | 70 | 1.09 | No | 31.5 | 15 | 90 |
| Example 5 | 1 | 0.5 | 2:1 | 99 | 79 | 100 | 79 | 1.09 | No | 31 | 13 | 90 |
| Example 6 | 45 | 0.45 | 100:1 | 45 | 40 | 81.8 | 40 | 3.34 | No | 30.5 | 13 | 88 |
| Example 7 | 40 | 30 | 1.3:1 | 58 | 55.3 | 96.7 | 79 | 1.28 | No | 35 | 18 | 80 |
| Example 8 | 30 | 25 | 1.2:1 | 55 | 51.8 | 78.6 | 69 | 1.18 | No | 34 | 17 | 85 |
| Example 9 | 30 | 16 | 1.9:1 | 52 | 42 | 74.3 | 50 | 1.48 | No | 33.5 | 15 | 85 |
| Example 10 | 16 | 7.5 | 2.1:1 | 35 | 22.2 | 41.7 | 24 | 1.38 | No | 32.5 | 13 | 85 |
| Example 11 | 1.5 | 0.5 | 3:1 | 24 | 13.9 | 24.4 | 14 | 1.12 | No | 31.5 | 13 | 85 |
| Example 12 | 30 | 1 | 30:1 | 35 | 24 | 50 | 24 | 1.32 | No | 32.2 | 18 | 86 |
| Example 14 | 40 | 0.5 | 90:1 | 45 | 40 | 75 | 40 | 3.09 | No | 31.4 | 14 | 89 |
| Comparative Example 1 | 40 | 40 | 1:1 | 24 | 24 | 40 | 40 | 1.06 | Lithium plating | / | 20 | 40 |
| Comparative Example 2 | 40 | 40 | 1:1 | 0 | 0 | 0 | 0 | 1.065 | Lithium plating | / | 25 | 40 |
| Comparative Example 3 | 40 | 40 | 1:1 | 60 | 60 | 100 | 100 | 1.065 | Lithium plating | / | 20 | 40 |

| | | | | | | | | | | | | |
|---|---|---|---|---|---|---|---|---|---|---|---|---|
| Note: X2 represents the percentage by weight of the silicon-based material in the second active material layer; X1 represents the percentage by weight of the silicon-based material in the first active material layer; B represents the ratio of the percentage by weight of the silicon-based material in the second active material layer to the percentage by weight of the silicon-based material in the first active material layer; C2 represents the percentage by weight of the first carbon material in the second active material layer in the second region; C1 represents the percentage by weight of the first carbon material in the first active material layer in the first region; M2 represents the percentage by weight of the first carbon material in the carbon-containing material in the second region; M1 represents the percentage by weight of the first carbon material in the carbon-containing material in the first region; and the first CB value represents the CB value of the second active material layer. | | | | | | | | | | | | |

**Table 2 Some process parameters of Examples 7 to 14 and Comparative Examples 1 to 3**

| Examples | X3 (%) | X4 (%) | N2 (%) | N1 (%) |
|---|---|---|---|---|
| Example 1 | 30 | 30 | 20 | 20 |
| Example 2 | 20 | 20 | 30 | 30 |
| Example 3 | 10 | 10 | 68 | 68 |
| Example 4 | 1 | 1 | 70 | 70 |
| Example 5 | 0.50 | 0.50 | 79 | 79 |
| Example 6 | 0.45 | 0.45 | 40 | 40 |
| Example 7 | 25 | 35 | 84 | 74 |
| Example 8 | 20 | 30 | 74 | 64 |
| Example 9 | 12 | 20 | 55 | 45 |
| Example 10 | 5 | 10 | 34 | 14 |
| Example 11 | 0 | 1 | 24 | 4 |
| Example 12 | 20 | 25 | 24 | 14 |
| Example 14 | 0.45 | 0.5 | 40 | 30 |
| Comparative Example 1 | 40 | 40 | 0.4 | 40 |
| Comparative Example 2 | 40 | 40 | 0 | 0 |
| Comparative Example 3 | 40 | 40 | 100 | 100 |

| | | | | |
|---|---|---|---|---|
| Note: X3 represents the percentage by weight of the silicon-based material in the first sub-region based on the total weight of the silicon-based material and the carbon-containing material in the first sub-region; X4 represents the percentage by weight of the silicon-based material in the second sub-region based on the total weight of the silicon-based material and the carbon-containing material in the second sub-region; N2 represents the percentage by weight of the first carbon material in the carbon-containing material per unit area in the second sub-region; and N1 represents the percentage by weight of the first carbon material in the carbon-containing material per unit area in the first sub-region. | | | | |

As can be seen from the test results in Table 1, the negative electrodes of Comparative Examples 1 to 3 had the problem of lithium plating caused by the thinning of the second active material layer in the second region during the coating process. In Examples 1 to 14 of the present disclosure, by respectively setting the content of the silicon-based material and the content of the first carbon material in the second active material layer to be greater than the content of the silicon-based material and the content of the first carbon material in the first active material layer, no lithium plating occurred on the negative electrodes of the secondary batteries after 1500 cycles. The total time taken for charging from 10% SOC to 80% SOC in Examples 1 to 14 of the present disclosure was 13 minutes to 19.5 minutes, which was shorter than that taken in Comparative Examples 1 to 3, indicating that the secondary batteries in Examples 1 to 14 of the present disclosure had improved fast charging capability. The secondary batteries in Examples 1 to 14 of the present disclosure had a cycle capacity retention rate of 80% to 90% after 1500 cycles, which were higher than those in Comparative Examples 1 to 3.

As shown in FIG. 1 and FIG. 2, in Examples 7 to 14 of the present disclosure, by controlling the percentage by weight of the silicon-based material in the first sub-region to be greater than the percentage by weight of the silicon-based material in the second sub-region and controlling the percentage by weight of the first carbon material in the first sub-region to be greater than the percentage by weight of the first carbon material in the second sub-region to the carbon-containing material, the fast charging capability of the secondary battery could be improved, and the total time taken for charging from 10% SOC to 80% SOC was 13 min to 18 min. In addition, the cycle performance of the secondary battery could also be improved.

It should be noted that this disclosure is not limited to the above embodiments. The above-described embodiments are merely exemplary, and embodiments having substantially the same technical idea and the same effects within the scope of the technical solution of the present disclosure are all included in the technical scope of the present disclosure. In addition, other embodiments constructed by applying various modifications conceivable to those skilled in the art to the embodiments and combining some of the constituent elements of the embodiments without departing from the scope of the essence of the present disclosure are also included in the scope of the present disclosure.

## Claims

1. A secondary battery, comprising a negative electrode, wherein the negative electrode comprises a current collector and an active material layer arranged on a surface of the current collector, the active material layer comprises a silicon-based material and a carbon-containing material, and the carbon-containing material comprises a first carbon material;
the current collector comprises a main body portion and a tab located on one side of the main body portion, the main body portion comprises a first region and a second region, and the second region is located between the first region and the tab;
the active material layer comprises a first active material layer and a second active material layer, the first active material layer is located in the first region, and the second active material layer is located in the second region;
the percentage by weight of the silicon-based material in the second active material layer is greater than the percentage by weight of the silicon-based material in the first active material layer; and
the percentage by weight of the first carbon material in the second active material layer is greater than the percentage by weight of the first carbon material in the first active material layer.

2. The secondary battery according to claim 1, wherein a ratio of the percentage by weight of the silicon-based material in the second active material layer to the percentage by weight of the silicon-based material in the first active material layer is greater than 1:1 and less than or equal to 80:1.

3. The secondary battery according to claim 1 or 2, wherein a ratio of the percentage by weight of the silicon-based material in the second active material layer to the percentage by weight of the silicon-based material in the first active material layer is greater than or equal to 1.3:1 and less than or equal to 30:1.

4. The secondary battery according to any one of claims 1 to 3, wherein the percentage by weight of the silicon-based material in the first active material layer ranges from 0.5% to 30%, optionally from 1% to 20%; and/or
the percentage by weight of the silicon-based material in the second active material layer ranges from 1% to 40%, optionally from 1.5% to 30%.

5. The secondary battery according to any one of claims 1 to 4, wherein in the second region, the percentage by weight of the first carbon material in the carbon-containing material ranges from 40% to 100%, optionally from 50% to 90%; and/or
in the first region, the percentage by weight of the first carbon material in the carbon-containing material ranges from 20% to 80%, optionally from 30% to 70%; and/or
in the second region, the percentage by weight of the first carbon material in the second active material layer ranges from 24% to 96%, optionally from 35% to 89%; and/or
in the first region, the percentage by weight of the first carbon material in the first active material layer ranges from 14% to 79%, optionally from 24% to 69%.

6. The secondary battery according to any one of claims 1 to 5, wherein the carbon-containing material comprises a second carbon material, and a reversible gram capacity of the first carbon material is less than a reversible gram capacity of the second carbon material.

7. The secondary battery according to claim 6, wherein the reversible gram capacity of the first carbon material ranges from 320 mAh/g to 370 mAh/g, optionally from 330 mAh/g to 360 mAh/g; and/or
the reversible gram capacity of the second carbon material ranges from 340 mAh/g to 390 mAh/g, optionally from 350 mAh/g to 380 mAh/g.

8. The secondary battery according to claim 6 or 7, wherein a volume mean particle size Dv50 of the first carbon material is larger than a volume mean particle size Dv50 of the second carbon material.

9. The secondary battery according to claim 8, wherein the volume mean particle size DV50 of the first carbon material is greater than or equal to 1 µm and less than or equal to 15 µm; and
the volume mean particle size DV50 of the second carbon material is greater than or equal to 7 µm and less than or equal to 22 µm.

10. The secondary battery according to any one of claims 1 to 9, wherein a ratio of an area of the second region to an area of the first region is (3-20):100, optionally (5-15):100.

11. The secondary battery according to any one of claims 1 to 10, further comprising a positive electrode, wherein
a CB value of the second active material layer is greater than or equal to a CB value of the first active material layer, and the CB value is a ratio of a lithium intercalation capacity of the negative electrode per unit area to a release capacity of the positive electrode per unit area.

12. The secondary battery according to any one of claims 1 to 11, wherein the first active material layer comprises a first surface and a second surface, the first surface is close to the negative electrode current collector, the second surface is away from the negative electrode current collector, a thickness of the first active material layer is defined as H, and the first active material layer satisfies: a region formed from the first surface to 0.1H is a first sub-region, a region formed from the second surface to 0.1H is a second sub-region, and the percentage by weight of the silicon-based material in the second sub-region is greater than the percentage by weight of the silicon-based material in the first sub-region.

13. The secondary battery according to claim 12, wherein the percentage by weight of the silicon-based material in the first sub-region is greater than or equal to 0 and less than or equal to 25% based on the total weight of the silicon-based material and the carbon-containing material in the first sub-region; and/or
the percentage by weight of the silicon-based material in the second sub-region is greater than or equal to 1% and less than or equal to 35% based on the total weight of the silicon-based material and the carbon-containing material in the second sub-region.

14. The secondary battery according to claim 12 or 13, wherein the percentage by weight of the first carbon material in the carbon-containing material per unit area in the second sub-region is greater than the percentage by weight of the first carbon material in the carbon-containing material per unit area in the first sub-region;
optionally, the percentage by weight of the first carbon material in the carbon-containing material per unit area in the second sub-region ranges from 20% to 85%, preferably from 30% to 75%; and
optionally, the percentage by weight of the first carbon material in the carbon-containing material per unit area in the first sub-region ranges from 0 to 75%, preferably from 20% to 65%.

15. The secondary battery according to any one of claims 1 to 14, wherein the active material layer comprises a base layer and a supplementary layer, wherein the base layer is located in the first region and the second region; and the supplementary layer is arranged on a side of the base layer of the second region facing away from the current collector, the percentage by weight of the silicon-based material in the supplementary layer is greater than the percentage by weight of the silicon-based material of the base layer, and the percentage by weight of the first carbon material in the supplementary layer is greater than the percentage by weight of the first carbon material of the base layer.

16. The secondary battery according to any one of claims 1 to 15, wherein the active material layer comprises a base layer and an additional layer, wherein the additional layer integrally extends to cover a side of the base layer facing away from the current collector and a side of the base layer close to the tab, and a portion of the additional layer covering the side of the base layer close to the tab is located in the second region.

17. A method for preparing the secondary battery according to any one of claims 1 to 16, comprising:
providing a current collector, wherein the current collector comprises a main body and a tab on one side of the main body, the main body has a first region and a second region, and the second region is located between the first region and the tab; and
applying a slurry containing an active material to the first region and the second region of the current collector to form an active material layer, wherein the slurry containing the active material comprises a silicon-based material and a carbon-containing material, and the carbon-containing material comprises a first carbon material; and the active material layer comprises a first active material layer and a second active material layer, the first active material layer is located in the first region, the second active material layer is located in the second region, the percentage by weight of the silicon-based material in the second active material layer is greater than the percentage by weight of the silicon-based material in the first active material layer, and the percentage by weight of the first carbon material in the second active material layer is greater than the percentage by weight of the first carbon material in the first active material layer.

18. The method according to claim 17, wherein the applying the slurry containing the active material to the first region and the second region of the current collector to form the active material layer comprises:
applying a base slurry to the current collector to form a base layer, wherein the base layer is located in the first region and the second region; and
applying a supplemental slurry to a side of the base layer of the second region facing away from the current collector to form a supplementary layer, wherein the percentage by weight of the silicon-based material in the supplementary layer is greater than the percentage by weight of the silicon-based material of the base layer, and the percentage by weight of the first carbon material in the supplementary layer is greater than the percentage by weight of the first carbon material of the base layer.

19. The method according to claim 17, wherein the applying the slurry containing the active material to the first region and the second region of the current collector to form the active material layer comprises:
applying a base slurry to the current collector to form a base layer, wherein the base layer is located in the first region and the second region; and
applying an additional slurry on a side of the base layer facing away from the current collector to form an additional layer, wherein the additional layer covers a side of the base layer close to the tab, a portion of the additional layer covering the side of the base layer close to the tab is located in the second region, the percentage by weight of the silicon-based material of the additional slurry is greater than the percentage by weight of the silicon-based material of the base slurry, and the percentage by weight of the first carbon material of the additional slurry in the carbon-containing material is greater than the percentage by weight of the first carbon material of the base slurry in the carbon-containing material; and
optionally, the method further comprises: applying a supplemental slurry to a side of the additional layer of the second region facing away from the current collector to form a supplementary layer.

20. An electrical device, comprising the secondary battery according to any one of claims 1 to 16 and/or a secondary battery prepared by the method according to any one of claims 17 to 19.
